# EUROPEAN PATENT APPLICATION

(11) **EP 4 730 620 A1**
(43) Date of publication of application: **22.04.2026**
(21) Application number: 25193427.9
(22) Date of filing: 01.08.2025
(51) Int. Cl.: H02K 3/28, H02K 3/12

(54) **ROTARY ELECTRIC MACHINE STATOR**

(30) Priority: 16.10.2024 JP 2024180570; 28.02.2025 JP 2025032213; 31.03.2025 JP 2025059804
(71) Applicant: AISIN CORPORATION, Aichi 448-8650 (JP)
(72) Inventor: HASHIMOTO, Shingo, Kariya, Aichi, 448-8650 (JP); KAWANISHI, Yusaku, Kariya, Aichi, 448-8650 (JP); SUGAWARA, Junichi, Kariya, Aichi, 448-8650 (JP); YAMADA, Ryo, Kariya, Aichi, 448-8650 (JP)
(74) Representative: TBK

(57) **Abstract**

A rotary electric machine stator (100, 100B) includes: a stator core (10) having a plurality of slots; and a stator coil (20, 20B) wound around the stator core by a lap winding and having four parallel windings between a power supply side and a neutral line for each phase of three phases. The stator coil includes a coil piece including slot accommodation portions respectively accommodated in the slots spaced in a circumferential direction, a crossover portion exposed from an end surface on one side in an axial direction of the stator core, integrally connecting the slot accommodation portions, and extending in the circumferential direction, and leg portions respectively extending from the slot accommodation portions to a side opposite to the crossover portion and protruding from an end surface on the other side in the axial direction of the stator core. The coil piece includes a plurality of types of a standard coil piece in which the crossover portion has a standard slot pitch, a first coil piece in which the crossover portion has a first slot pitch larger than the standard slot pitch by one slot, and a second coil piece in which the crossover portion has a second slot pitch smaller than the standard slot pitch by one slot. The plurality of slots include first slots disposed at the standard slot pitch in the circumferential direction and in which only the slot accommodation portions of a same phase among the three phases are disposed, and second slots disposed at the standard slot pitch in the circumferential direction and in which only the slot accommodation portions of a same phase among the three phases are disposed, and adjacent to the respective first slots on one side in the circumferential direction. The parallel windings include a first unit coil in which the slot accommodation portions of the standard coil piece are disposed at positions other than both radially innermost and radially outermost positions of the first slots spaced in the circumferential direction, and the leg portions are joined to form a lap winding, and a second unit coil in which the slot accommodation portions of the standard coil piece are disposed at positions other than both radially innermost and radially outermost positions of the second slots spaced in the circumferential direction, and the leg portions are joined to form a lap winding. One of the slot accommodation portions of the first coil piece is disposed at the radially outermost position of the first slot, and the other of the slot accommodation portions of the first coil piece is disposed at the radially innermost position of the second slot. The one of the leg portions of the first coil piece and a corresponding one of the leg portions at one end of the first unit coil are joined, and the other of the leg portions of the first coil piece and a corresponding one of the leg portions at the other end of the second unit coil are joined. One of the slot accommodation portions of the second coil piece is disposed at the radially outermost position of the second slot, and the other of the slot accommodation portions of the second coil piece is disposed at the radially innermost position of the first slot. The one of the leg portions of the second coil piece and a corresponding one of the leg portions at one end of the second unit coil are joined, and the other of the leg portions of the second coil piece and a corresponding one of the leg portions at the other end of the first unit coil are joined. A power line terminal or a neutral line terminal is connected to the radially innermost position and the radially outermost position of the first slot and the second slot, and the power line terminal and the neutral line terminal are not connected to positions other than both the radially innermost position and the radially outermost position of the first slot and the second slot.

## Description

### TECHNICAL FIELD

This disclosure relates to a rotary electric machine stator.

### BACKGROUND DISCUSSION

There has been a technique in which, in a coil end on a non-welded side among coil ends on both sides in an axial direction, a crossover portion continuous from a pair of slot accommodation portions having a 7-slot pitch and a crossover portion continuous from a pair of slot accommodation portions having a 5-slot pitch overlap in the axial direction.

Examples of the related art include JP 2016-152751A (Reference 1) and JP 2003-235191A (Reference 2).

However, in such a technique in the related art, head top portions (portions located on axially outermost side) of the two types of crossover portions are likely to overlap each other when viewed in the axial direction. When the head top portions overlap when viewed in the axial direction, an axial size of the coil end increases.

A need thus exists for a rotary electric machine stator in which an axial size of a coil end on a non-welded side is reduced.

### SUMMARY

According to an aspect of this disclosure, a rotary electric machine stator includes:
a stator core having a plurality of slots; and
a stator coil wound around the stator core by a lap winding and having four parallel windings between a power supply side and a neutral line for each phase of three phases, in which
the stator coil includes a coil piece including
   slot accommodation portions respectively accommodated in the slots spaced in a circumferential direction,
   a crossover portion exposed from an end surface on one side in an axial direction of the stator core, integrally connecting the slot accommodation portions, and extending in the circumferential direction, and
   leg portions respectively extending from the slot accommodation portions to a side opposite to the crossover portion and protruding from an end surface on the other side in the axial direction of the stator core,
the coil piece includes a plurality of types of
   a standard coil piece in which the crossover portion has a standard slot pitch,
   a first coil piece in which the crossover portion has a first slot pitch larger than the standard slot pitch by one slot, and
   a second coil piece in which the crossover portion has a second slot pitch smaller than the standard slot pitch by one slot,
the plurality of slots include
   first slots disposed at the standard slot pitch in the circumferential direction and in which only the slot accommodation portions of a same phase among the three phases are disposed, and
   second slots disposed at the standard slot pitch in the circumferential direction and in which only the slot accommodation portions of the same phase among the three phases are disposed, and adjacent to the respective first slots on one side in the circumferential direction,
the parallel windings include
   a first unit coil in which the slot accommodation portions of the standard coil piece are disposed at positions other than both radially innermost and radially outermost positions of the first slots spaced in the circumferential direction, and the leg portions are joined to form a lap winding, and
   a second unit coil in which the slot accommodation portions of the standard coil piece are disposed at positions other than both radially innermost and radially outermost positions of the second slots spaced in the circumferential direction, and the leg portions are joined to form a lap winding,
one of the slot accommodation portions of the first coil piece is disposed at the radially outermost position of the first slot, and the other of the slot accommodation portions of the first coil piece is disposed at the radially innermost position of the second slot,
the one of the leg portions of the first coil piece and a corresponding one of the leg portions at one end of the first unit coil are joined, and the other of the leg portions of the first coil piece and a corresponding one of the leg portions at the other end of the second unit coil are joined,
one of the slot accommodation portions of the second coil piece is disposed at the radially outermost position of the second slot, and the other of the slot accommodation portions of the second coil piece is disposed at the radially innermost position of the first slot,
the one of the leg portions of the second coil piece and a corresponding one of the leg portions at one end of the second unit coil are joined, and the other of the leg portions of the second coil piece and a corresponding one of the leg portions at the other end of the first unit coil are joined, and
a power line terminal or a neutral line terminal is connected to the radially innermost position and the radially outermost position of the first slot and the second slot, and the power line terminal and the neutral line terminal are not connected to positions other than both the radially innermost position and the radially outermost position of the first slot and the second slot.

According to the above aspect of this disclosure, it is possible to reduce an axial size of a coil end on a non-welded side.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a plan view of a rotary electric machine (stator) according to the present embodiment;
Fig. 2 is a circuit diagram of Y-connected three-phase coils according to the present embodiment;
Fig. 3 is a perspective view of the stator according to the present embodiment;
Fig. 4 is a diagram illustrating a configuration of a coil piece forming a stator coil;
Fig. 4A is a diagram illustrating a configuration (wave winding) of the coil piece forming the stator coil;
Fig. 5 is a diagram illustrating a configuration (part 1) of a U1 coil portion of a U-phase coil according to Embodiment 1;
Fig. 6 is a diagram illustrating a configuration (part 2) of the U1 coil portion of the U-phase coil according to Embodiment 1;
Fig. 7 is a diagram illustrating a configuration (part 1) of a U2 coil portion of the U-phase coil according to Embodiment 1;
Fig. 8 is a diagram illustrating a configuration (part 2) of the U2 coil portion of the U-phase coil according to Embodiment 1;
Fig. 9 is a diagram illustrating a configuration (part 1) of a U3 coil portion of the U-phase coil according to Embodiment 1;
Fig. 10 is a diagram illustrating a configuration (part 2) of the U3 coil portion of the U-phase coil according to Embodiment 1;
Fig. 11 is a diagram illustrating a configuration (part 1) of a U4 coil portion of the U-phase coil according to Embodiment 1;
Fig. 12 is a diagram illustrating a configuration (part 2) of the U4 coil portion of the U-phase coil according to Embodiment 1;
Fig. 13 is a diagram illustrating a circulating current;
Fig. 14 is a perspective view illustrating all coil pieces forming the U-phase coil taken out;
Fig. 15 is a perspective view illustrating the U1 coil portion and the U2 coil portion of the U-phase coil taken out;
Fig. 16 is a perspective view of a coil piece including a standard pitch crossover portion;
Fig. 17 is a perspective view of a coil piece including a long-pitch crossover portion;
Fig. 18 is a perspective view of a coil piece including a short-pitch crossover portion;
Fig. 19 is an enlarged view of a portion Q18 in Fig. 15;
Fig. 20 is a perspective view illustrating a relationship between the long-pitch crossover portion and the short-pitch crossover portion with respect to the U1 coil portion and the U2 coil portion;
Fig. 21 is a perspective view illustrating a relationship between standard pitch crossover portions of the U3 coil portion and the U4 coil portion and the long-pitch crossover portion and the short-pitch crossover portion of the U1 coil portion and the U2 coil portion;
Fig. 22 is a diagram illustrating a configuration (part 1) of a U1 coil portion of a U-phase coil according to Embodiment 2;
Fig. 23 is a diagram illustrating a configuration (part 2) of the U1 coil portion of the U-phase coil according to Embodiment 2;
Fig. 24 is a diagram illustrating a configuration (part 1) of a U2 coil portion of the U-phase coil according to Embodiment 2;
Fig. 25 is a diagram illustrating a configuration (part 2) of the U2 coil portion of the U-phase coil according to Embodiment 2;
Fig. 26 is a diagram illustrating a configuration (part 1) of a U3 coil portion of the U-phase coil according to Embodiment 2;
Fig. 27 is a diagram illustrating a configuration (part 2) of the U3 coil portion of the U-phase coil according to Embodiment 2;
Fig. 28 is a diagram illustrating a configuration (part 1) of a U4 coil portion of the U-phase coil according to Embodiment 2;
Fig. 29 is a diagram illustrating a configuration (part 2) of the U4 coil portion of the U-phase coil according to Embodiment 2;
Fig. 30 is a perspective view of a stator according to Embodiment 3;
Fig. 31 is an enlarged view of a stator coil according to Embodiment 3 as viewed from a radially inner side;
Fig. 32 is a perspective view of all coil pieces forming a U-phase coil of the stator coil according to Embodiment 3 taken out;
Fig. 33 is a perspective view of a coil piece including a long-pitch crossover portion;
Fig. 34 is a perspective view of a coil piece including a short-pitch crossover portion;
Fig. 35 is a perspective view illustrating a relationship between the long-pitch crossover portion and the short-pitch crossover portion with respect to a U1 coil portion and a U2 coil portion;
Fig. 36 is a perspective view illustrating a relationship between standard pitch crossover portions of a U3 coil portion and a U4 coil portion and the long-pitch crossover portion and the short-pitch crossover portion of the U1 coil portion and the U2 coil portion;
Fig. 37 is a plan view of a part of the stator as viewed from a Z1 side, illustrating a relationship between a neutral line bus bar and a short-pitch head top portion;
Fig. 38 is a plan view illustrating a state in which the neutral line bus bar in Fig. 37 is removed; and
Fig. 39 is a plan view of another part of the stator as viewed from the Z1 side, illustrating a relationship between a power line bus bar and the short-pitch head top portion.

### DETAILED DESCRIPTION

Hereinafter, embodiments will be described in detail with reference to the accompanying drawings. The dimensional ratios in the drawings are merely examples and are not limited. Further, shapes and the like in the drawings may be partially exaggerated for the convenience of description. In the drawings, for the sake of clarity, a plurality of parts having the same attribute may be only partially denoted by reference signs.

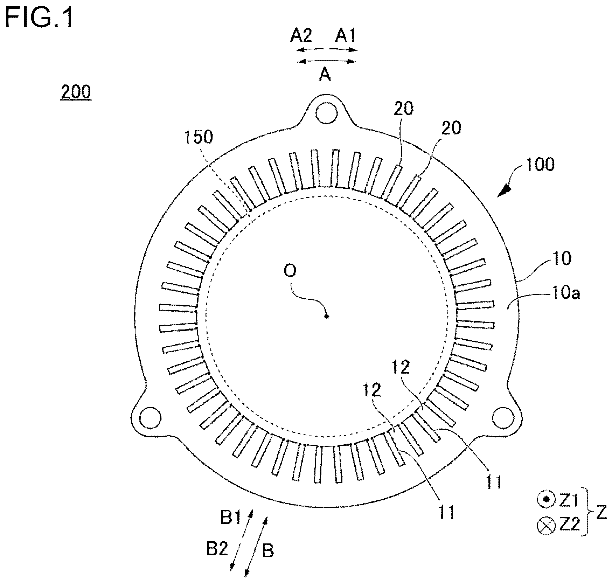

Fig. 1 is a plan view of a rotary electric machine 200 (stator 100) according to the present embodiment.

In the present specification, an "axial direction" means a direction (Z direction: see Fig. 1) along a rotation axis (sign O) of a stator core 10 (rotor 150). Respective sides in the axial direction are referred to as a Z1 side and a Z2 side. A "circumferential direction" means a circumferential direction (A direction) of the stator core 10. Respective directions in the circumferential direction are defined as an A1 direction and an A2 direction. A "radial direction" means a radial direction (B direction) based on the rotation axis O of the stator core 10 (rotor 150). A "radially inner side" or "radially inward" and "inner diameter side" mean a direction toward a center of the stator core 10 (B1 direction). A "radially outer side" or "radially outward" and "outer diameter side" mean a direction toward an outside of the stator core 10 (B2 direction).

As illustrated in Fig. 1, the rotary electric machine 200 includes the stator 100 and the rotor 150. Each of the stator 100 and the rotor 150 is formed in an annular shape. The stator 100 and the rotor 150 face each other. The rotor 150 is disposed on the radially inner side (B1 direction side) of the stator 100. The rotor 150 is provided with a plurality of permanent magnets (not illustrated). That is, the rotary electric machine 200 according to the present embodiment is implemented as an inner rotor type rotary electric machine.

The stator 100 includes the stator core 10. The stator core 10 faces the rotor 150 in the radial direction. The stator core 10 is provided with a plurality of (for example, 48) slots 11. Teeth 12 are provided between adjacent slots 11. The stator core 10 is implemented, for example, by stacking a plurality of electromagnetic steel sheets in a rotation center axial direction (Z direction) to allow magnetic flux to pass through. The stator core 10 may be formed by compression molding magnetic powder. The stator core 10 has an end surface 10a on each of one side (Z1 side) and the other side (Z2 side) in the axial direction. The stator 100 includes a stator coil 20.

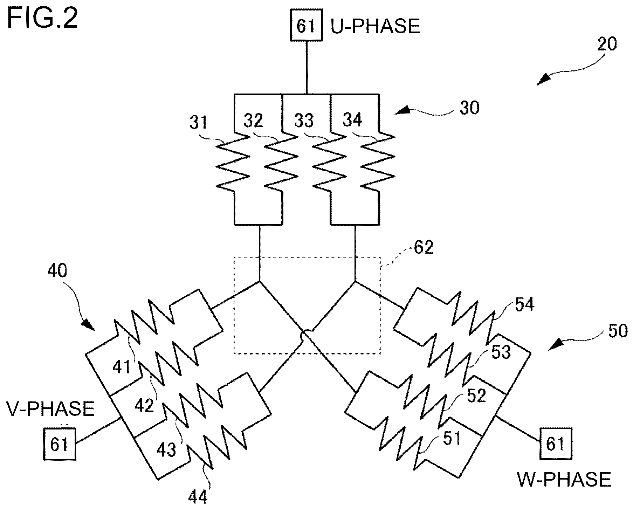

Fig. 2 is a circuit diagram of Y-connected three-phase coils according to the present embodiment.

As illustrated in Fig. 2, the stator coil 20 is connected to an external power supply unit, and is supplied with power (for example, three-phase AC power). The stator coil 20 generates a magnetic field when power is supplied thereto. The stator coil 20 includes a U-phase coil 30, a V-phase coil 40, and a W-phase coil 50 through which each of three-phase (U-phase, V-phase, and W-phase) AC currents flows.

The U-phase coil 30 includes a U1 coil portion 31 (an example of a first coil portion), a U2 coil portion 32 (an example of a second coil portion), a U3 coil portion 33 (an example of a third coil portion), and a U4 coil portion 34 (an example of a fourth coil portion) that are connected in parallel to each other. The V-phase coil 40 includes a V1 coil portion 41, a V2 coil portion 42, a V3 coil portion 43, and a V4 coil portion 44 connected in parallel to each other. The W-phase coil 50 includes a W1 coil portion 51, a W2 coil portion 52, a W3 coil portion 53, and a W4 coil portion 54 connected in parallel to each other. The U-phase coil 30, the V-phase coil 40, and the W-phase coil 50 are Y-connected (star-connected). That is, a so-called "4Y" connection is achieved. AC power of the U-phase, the V-phase, and the W-phase is input from a power line terminal 61 to the U-phase coil 30, the V-phase coil 40, and the W-phase coil 50, respectively. Output sides of the U-phase coil 30, the V-phase coil 40, and the W-phase coil 50 are connected to each other via a neutral line terminal 62.

In an example illustrated in Fig. 2, the "4Y" connection is achieved by a combination of two so-called "2Y" connections, but the "4Y" connection may be achieved directly. That is, end portions on a neutral line side of the U1 coil portion 31 to the U4 coil portion 34 may be connected to one terminal, end portions on the neutral line side of the V1 coil portion 41 to the V4 coil portion 44 may be connected to one terminal, end portions on the neutral line side of the W1 coil portion 51 to the W4 coil portion 54 may be connected to one terminal, and these three terminals may be connected to each other.

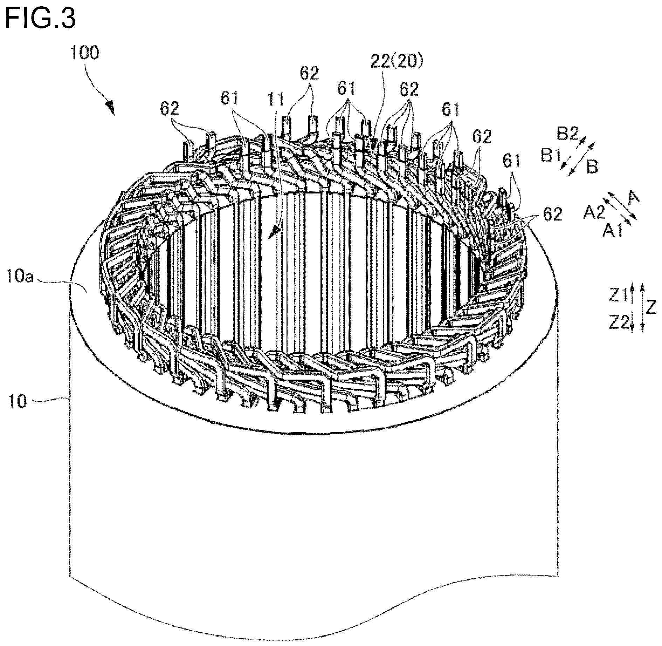

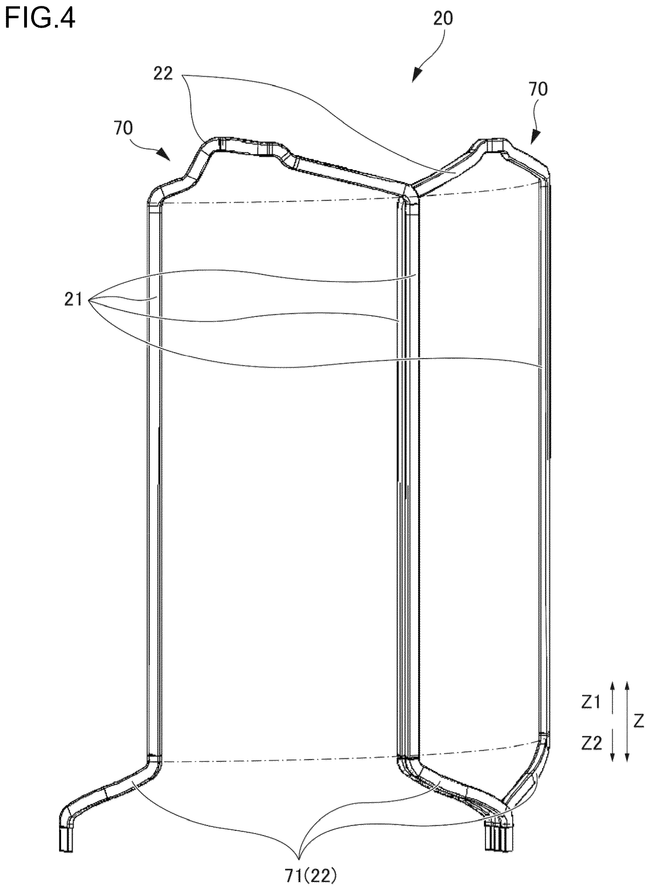

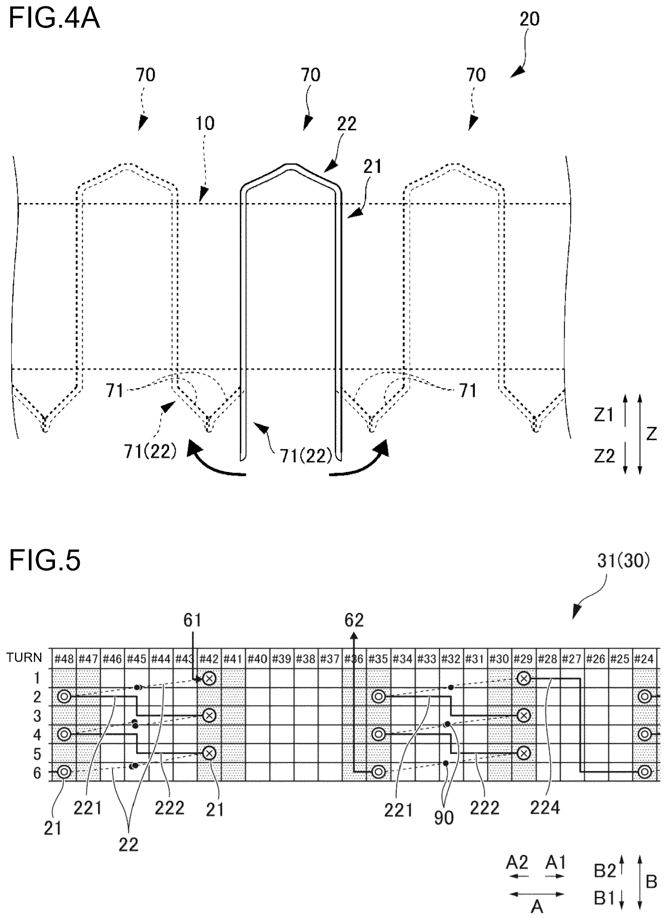

Fig. 3 is a perspective view of the stator 100 according to the present embodiment. Fig. 4 is a diagram illustrating a configuration of a coil piece 70 forming the stator coil 20. Fig. 4A is a diagram illustrating a configuration (wave winding) of the coil piece 70 forming the stator coil 20.

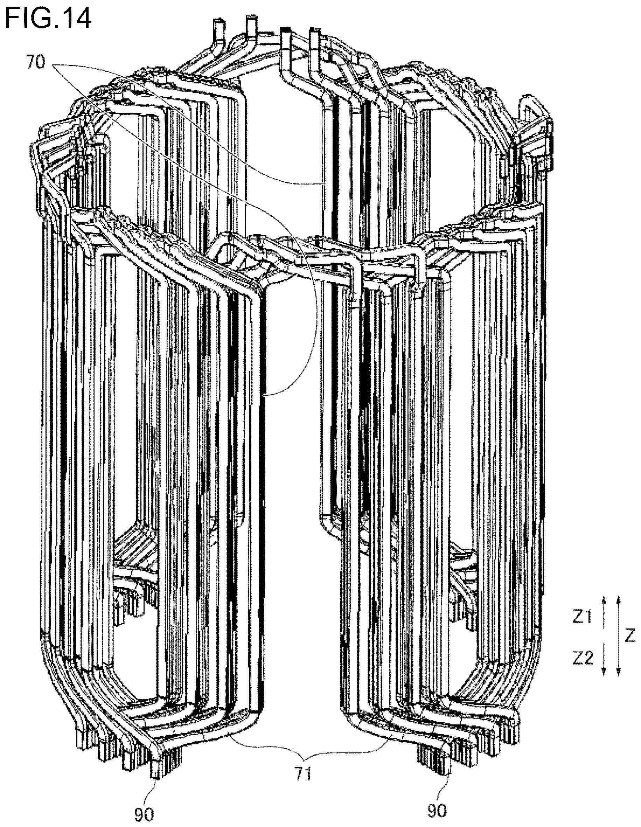

As illustrated in Fig. 3, the stator coil 20 is wound around the stator core 10. In the present embodiment, the stator coil 20 includes a plurality of coil pieces 70 (Fig. 4) disposed in each of the plurality of slots 11. Fig. 4 illustrates a relationship between two coil pieces 70 as an example, but the other coil pieces 70 will be described later with reference to Figs. 14 to 16 and the like. Each of the plurality of coil pieces 70 may have an inverted U shape when viewed with the Z1 side as an upper side. Each of the plurality of coil pieces 70 may have a form in which a flat conductor wire having a rectangular cross section is covered with an insulating coating. In the present embodiment, a lap winding is described as an example, but this disclosure is not limited thereto. For example, an example illustrated in Fig. 4A is an example of a wave winding, and the stator coil 20 is formed as a conductor wire that is wave wound by connecting the plurality of coil pieces 70.

Each of the plurality of coil pieces 70 may have an inverted U shape that opens on the Z2 side or an O shape that closes on the Z2 side. Each of the plurality of coil pieces 70 may be formed by molding the Z1 side with a mold and bending the Z2 side after assembly. Although Fig. 4 illustrates some of the plurality of coil pieces 70 for the purpose of illustration, a mode of bending differs depending on a type (described later) of the coil piece 70.

The plurality of coil pieces 70 have a plurality of types, but here, common features will be described first.

Each of the plurality of coil pieces 70 includes a slot accommodation portion 21 and a crossover portion 22.

The slot accommodation portion 21 extends in the axial direction (Z direction) and is accommodated in each of the plurality of slots 11.

The crossover portions 22 connect a plurality of slot accommodation portions 21 in pairs. That is, the crossover portion 22 connects the slot accommodation portions 21 accommodated in the slots 11 different from each other. The crossover portions 22 are formed on the Z2 side and the Z1 side. Details of the crossover portion 22 will be described later.

As illustrated in Fig. 4, after the slot accommodation portions 21 are accommodated in the slots 11, end portions of leg portions 71 on the Z2 side of the different coil pieces 70 may be joined by laser joining or the like to form the crossover portions 22 on the Z2 side. In Fig. 4, the coil piece 70 in which the leg portion 71 on the Z2 side is bent outward or inward in the circumferential direction is illustrated as an example, but a bending mode of the leg portion 71 differs depending on a type and winding method of the coil piece 70, and various coil pieces 70 will be described later with reference to Figs. 14 to 16 and the like.

In the present embodiment, the crossover portion 22 on the Z2 side is formed by joining the leg portions 71 of the two coil pieces 70. Meanwhile, the crossover portion 22 on the Z1 side has a continuous form without a joint portion, and may be formed by a mold.

In the stator coil 20, the U-phase coil 30, the V-phase coil 40, and the W-phase coil 50 have substantially the same configuration. Therefore, the U-phase coil 30 will be mainly described below.

The U-phase coil 30 is disposed in the stator core 10 such that four sets of the U1 coil portion 31, the U2 coil portion 32, the U3 coil portion 33, and the U4 coil portion 34 form a parallel circuit. One end portion of each of the U1 coil portion 31, the U2 coil portion 32, the U3 coil portion 33, and the U4 coil portion 34 is connected to the power line terminal 61. AC power is supplied from the power line terminal 61. The other end portion of each of the U1 coil portion 31, the U2 coil portion 32, the U3 coil portion 33, and the U4 coil portion 34 is connected to the neutral line terminal 62.

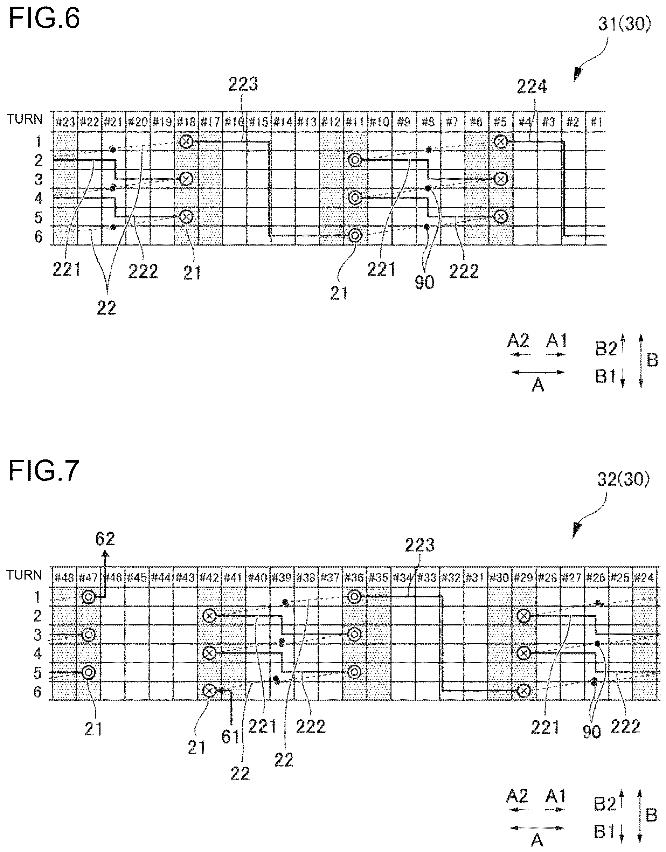

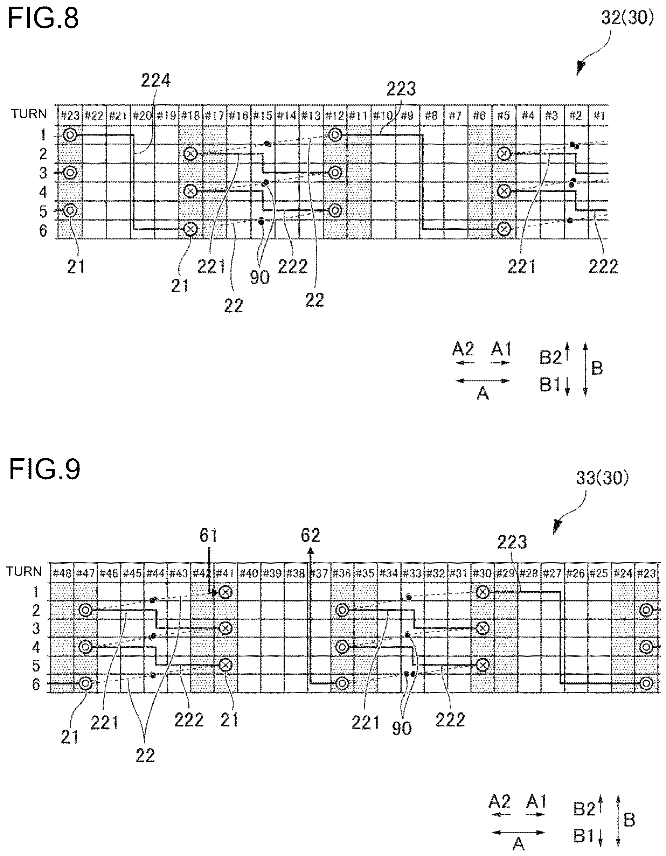

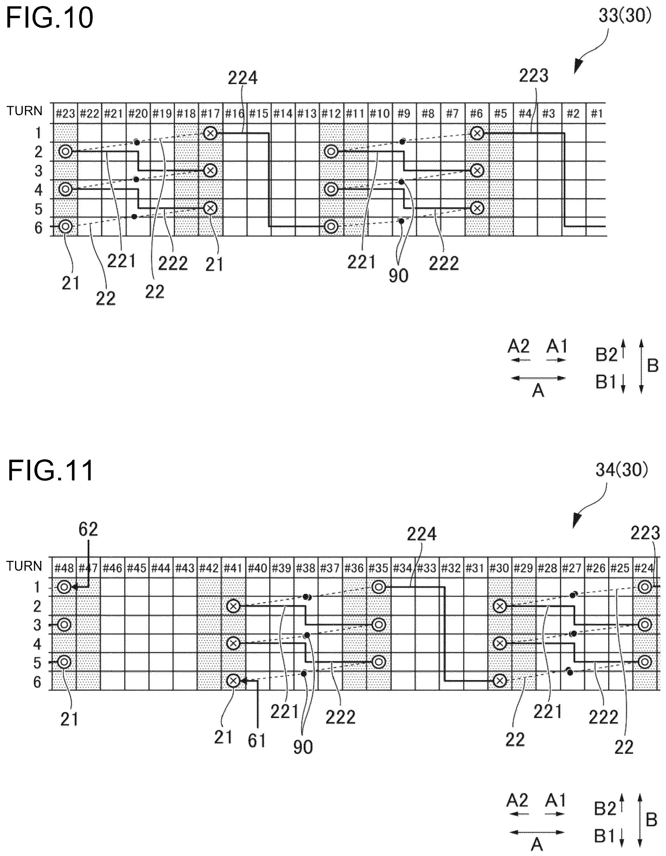

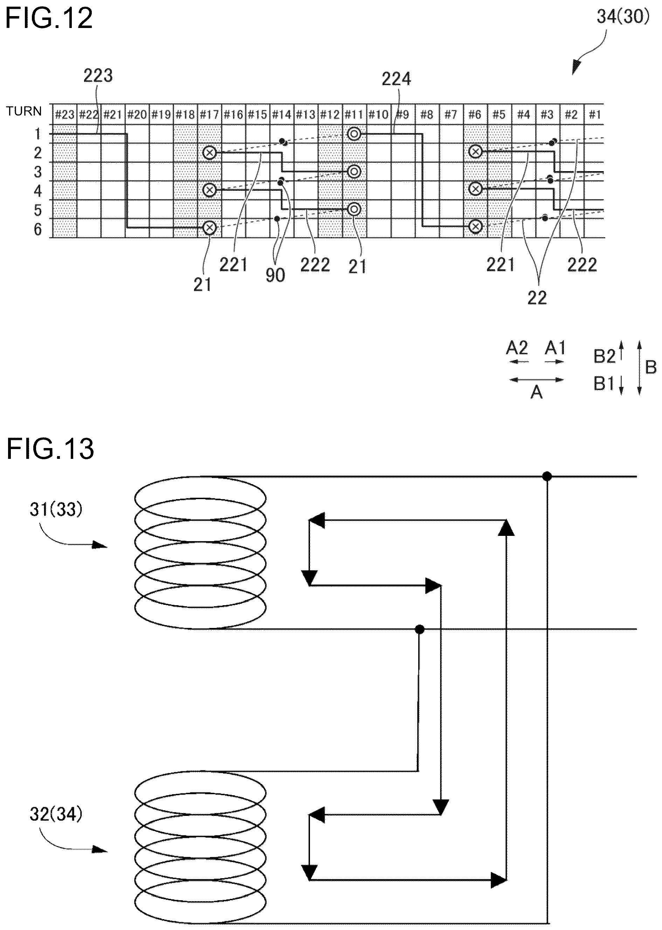

Figs. 5 and 6 are diagrams illustrating a configuration of the U1 coil portion 31 of the U-phase coil 30. Figs. 7 and 8 are diagrams illustrating a configuration of the U2 coil portion 32 of the U-phase coil 30. Figs. 9 and 10 are diagrams illustrating a configuration of the U3 coil portion 33 of the U-phase coil 30. Figs. 11 and 12 are diagrams illustrating a configuration of the U4 coil portion 34 of the U-phase coil 30. Fig. 13 is a diagram illustrating a circulating current. In Fig. 13, a flow of the circulating current between the U1 coil portion 31 and the U2 coil portion 32 is schematically indicated by arrows.

In Figs. 5 to 12, a numerical value below a left character "turn" indicates a turn position (which turn), and a numerical value of a character "#" indicates a slot position. For example, among the 48 slots 11, a first slot position is indicated by "#1". The slot accommodation portions 21 are indicated by white circle marks at corresponding turn positions in the corresponding slots 11. A white circle mark and a cross mark are provided in the white circle mark, and these two types of marks indicate a direction of a current flow.

In Figs. 5 to 12, the crossover portion 22 on the Z1 side is indicated by a solid line, and the crossover portion 22 on the Z2 side is indicated by a dotted line.

In the present embodiment, the U-phase coil 30 has a six-turn configuration, and is wound around the stator core 10 by the lap winding. In the present embodiment, the number of turns is "6", but the number of turns may be any numerical value (for example, an even number) other than 6.

Specifically, as indicated by hatched portions in Figs. 5 to 12, the U-phase coil 30 is arranged in slots 11 #5, #6, #11, #12, #17, #18, #23, #24, #29, #30, #35, #36, #41, #42, #47, and #48 among the 48 slots 11. Here, the slots 11 #5 and #6, the slots 11 #11 and #12, the slots 11 #17 and #18, the slots 11 #23 and #24, the slots 11 #29 and #30, the slots 11 #35 and #36, the slots 11 #41 and #42, and the slots 11 #47 and #48 are two slots 11 adjacent to each other in the circumferential direction (A direction) (an outer side in the circumferential direction with respect to a center of the crossover portion 22 in the circumferential direction is an example of a first or fourth slot, and an inner side in the circumferential direction with respect to the center of the crossover portion 22 is an example of a second or third slot). Figs. 5 to 12 are diagrams illustrating the annular stator core 10 in an expanded form such that an upper-lower direction is the radial direction (B direction) of the stator core 10 and a left-right direction is the circumferential direction (A direction) of the stator core 10. That is, in Figs. 5 and 6, a right end of Fig. 5 and a left end of Fig. 6 are connected to each other, and a left end of Fig. 5 and a right end of Fig. 6 are connected to each other. The same applies to Figs. 7 and 8, Figs. 9 and 10, and Figs. 11 and 12. Although not illustrated, for the V-phase coil 40 and the W-phase coil 50, the V-phase coil 40 and the W-phase coil 50 are disposed in the stator core 10 so as to be offset from the U-phase coil 30 by two slots and four slots of the slot 11, respectively. Here, when lead-out positions of the power line terminal 61 and the neutral line terminal 62 are set as a reference, the V-phase and the W-phase with respect to the U-phase are shifted by four slots and eight slots. The U-phase, the W-phase, and the V-phase are disposed in this order along the A1 direction while being shifted by four and by eight in the circumferential direction.

The plurality of slot accommodation portions 21 are accommodated in the plurality of slots 11 while being disposed along the radial direction (B direction) of the stator core 10. Specifically, in the present embodiment, six slot accommodation portions 21 are disposed in a column in the radial direction in one slot 11. For example, in one slot 11, the slot accommodation portion 21 disposed on an outermost side (outer diameter side: B2 direction side) is defined as a first turn (first layer), and the slot accommodation portion 21 disposed on an innermost side (inner diameter side: B1 direction side) is defined as a sixth turn (sixth layer).

Here, in the present embodiment, as described above, the slot accommodation portions 21 are inserted into two slots 11 adjacent to each other in the circumferential direction (A direction). The two slots 11 are periodically disposed along the circumferential direction at a 6-slot pitch (at intervals of four slots). Hereinafter, of the two slots 11 adjacent to each other in the circumferential direction (A direction), the slot 11 closer to the slot #1 in ascending order is also referred to as an "odd number side slot 11", and the slot 11 farther from the slot #1 is also referred to as an "even number side slot 11".

In the present embodiment, the U1 coil portion 31, the U2 coil portion 32, the U3 coil portion 33, and the U4 coil portion 34 do not adopt a configuration in which the plurality of slot accommodation portions 21 are collectively inserted into only one of the odd number side slot 11 and the even number side slot 11. That is, a configuration is adopted in which the plurality of slot accommodation portions 21 are inserted in a distributed manner into the odd number side slots 11 and the even number side slots 11.

Specifically, in the U1 coil portion 31, the slot accommodation portions 21 are inserted into the slots 11 #5, #11, #18, #24, #29, #35, #42, and #48. That is, the slot accommodation portions 21 are evenly distributed among the four odd number side slots 11 and the four even number side slots 11. The U1 coil portion 31 is wound from the neutral line terminal 62 in the A2 direction, and is lap-wound clockwise when viewed in the B2 direction (a mode in which the current flow from the neutral line terminal 62 is clockwise in each coil element, the same applies hereinafter).

In the U2 coil portion 32, the slot accommodation portions 21 are inserted into the slots 11 #5, #12, #18, #23, #29, #36, #42, and #47. That is, the slot accommodation portions 21 are evenly distributed among the four odd number side slots 11 and the four even number side slots 11. The U2 coil portion 32 is wound from the neutral line terminal 62 in the A1 direction, and is lap-wound counterclockwise when viewed in the B2 direction.

In the U3 coil portion 33, the slot accommodation portions 21 are inserted into the slots 11 #6, #12, #17, #23, #30, #36, #41, and #47. That is, the slot accommodation portions 21 are evenly distributed among the four odd number side slots 11 and the four even number side slots 11. The U3 coil portion 33 is wound from the neutral line terminal 62 in the A2 direction, and is lap-wound clockwise when viewed in the B2 direction.

In the U4 coil portion 34, the slot accommodation portions 21 are inserted into the slots 11 #6, #11, #17, #24, #30, #35, #41, and #48. That is, the slot accommodation portions 21 are evenly distributed among the four odd number side slots 11 and the four even number side slots 11. The U4 coil portion 34 is wound from the neutral line terminal 62 in the A1 direction, and is lap-wound counterclockwise when viewed in the B2 direction.

In this way, according to the present embodiment, in the U1 coil portion 31, the U2 coil portion 32, the U3 coil portion 33, and the U4 coil portion 34, the plurality of slot accommodation portions 21 are inserted in a distributed manner in the odd number side slots 11 and the even number side slots 11. That is, there are two types of unit coils corresponding to three turns. In a first unit coil, the slot accommodation portions 21 are inserted into the odd number side slots 11 on a side close to a neutral line, and in a second unit coil, the slot accommodation portions 21 are inserted into the even number side slots 11 on the side close to the neutral line. The first unit coils and the second unit coils are alternately disposed in the circumferential direction. Accordingly, the circulating current can be reduced. That is, for example, in a case of a comparative example in which the slot accommodation portions 21 are inserted into only the odd number side slots 11 in the U1 coil portion 31 and the slot accommodation portions 21 are inserted into only the even number side slots 11 in the U2 coil portion 32, a difference in back electromotive voltage that may occur between the U1 coil portion 31 and the U2 coil portion 32 increases, and the circulating current (see Fig. 13) tends to increase. In contrast, according to the present embodiment, the circulating current can be reduced by minimizing the difference in the back electromotive voltage.

In the present embodiment, the U1 coil portion 31, the U2 coil portion 32, the U3 coil portion 33, and the U4 coil portion 34 do not adopt a configuration in which the plurality of slot accommodation portions 21 are collectively inserted at turn positions 1 to 3 or turn positions 4 to 6 among the six turns. That is, the U1 coil portion 31, the U2 coil portion 32, the U3 coil portion 33, and the U4 coil portion 34 each have a configuration in which the plurality of slot accommodation portions 21 are inserted in a distributed manner at the turn positions 1 to 6.

Specifically, in the U1 coil portion 31, in the slots 11 #5, #18, #29, and #42 among the slots 11 #5, #11, #18, #24, #29, #35, #42, and #48, the slot accommodation portions 21 are inserted at radial positions corresponding to first, third, and fifth turns. In the remaining slots 11 #11, #24, #35, and #48, the slot accommodation portions 21 are inserted at radial positions corresponding to second, fourth, and sixth turns.

In the U2 coil portion 32, in the slots 11 #12, #23, #36, and #47 among the slots 11 #5, #12, #18, #23, #29, #36, #42, and #47, the slot accommodation portions 21 are inserted at radial positions corresponding to the first, third, and fifth turns. In the remaining slots 11 #5, #18, #29, and #42, the slot accommodation portions 21 are inserted at radial positions corresponding to the second, fourth, and sixth turns.

The same applies to the U3 coil portion 33 and the U4 coil portion 34.

In this way, according to the present embodiment, in the U1 coil portion 31, the U2 coil portion 32, the U3 coil portion 33, and the U4 coil portion 34, the plurality of slot accommodation portions 21 are inserted in a distributed manner at the turn positions 1 to 6, so that the circulating current can be reduced. That is, for example, in a case of a comparative example in which the slot accommodation portions 21 are inserted only at the turn positions 1 to 3 in the U1 coil portion 31 and the slot accommodation portions 21 are inserted only at the turn positions 4 to 6 in the U2 coil portion 32, a loss caused by an eddy current in the U2 coil portion 32 is significantly larger than a loss in the U1 coil portion 31. Due to such a difference, the difference in the back electromotive voltage that may occur between the U1 coil portion 31 and the U2 coil portion 32 increases, and the circulating current tends to increase. In contrast, according to the present embodiment, the circulating current can be reduced by minimizing the difference in the back electromotive voltage.

In the present embodiment, the U1 coil portion 31, the U2 coil portion 32, the U3 coil portion 33, and the U4 coil portion 34 do not adopt a configuration in which the slot accommodation portions 21 for six turns are collectively inserted into the corresponding slot 11. That is, the U1 coil portion 31, the U2 coil portion 32, the U3 coil portion 33, and the U4 coil portion 34 each have a configuration in which the slot accommodation portions 21 for three turns are inserted into the corresponding slot 11. Accordingly, in the U1 coil portion 31, the U2 coil portion 32, the U3 coil portion 33, and the U4 coil portion 34, the plurality of slot accommodation portions 21 are disposed substantially uniformly over an entire circumference of 360 degrees.

In this way, according to the present embodiment, in the U1 coil portion 31, the U2 coil portion 32, the U3 coil portion 33, and the U4 coil portion 34, the plurality of slot accommodation portions 21 are disposed substantially uniformly over the entire circumference of 360 degrees, so that the circulating current can be reduced. That is, for example, in a case of a comparative example in which the slot accommodation portions 21 for six turns are inserted into the corresponding slots 11 in the U1 coil portion 31 and the slot accommodation portions 21 for six turns are inserted into the corresponding slots 11 in the U2 coil portion 32, the U1 coil portion 31 and the U2 coil portion 32 are disposed only in a circumferential range of 180 degrees. In the comparative example having such a bias, the difference in the back electromotive voltage that may occur between the U1 coil portion 31 and the U2 coil portion 32 due to eccentricity of the rotor 150 or the like increases, and the circulating current tends to increase. In contrast, according to the present embodiment, the circulating current can be reduced by minimizing the difference in the back electromotive voltage.

Hereinafter, such a characteristic configuration contributing to minimization of the difference in the back electromotive voltage (configuration for enhancing uniformity of a parallel coil disposition in the circumferential direction, the radial direction, and the axial direction) is also referred to as "highly uniform parallel coil disposition".

Here, in the present embodiment, a power line of the U1 coil portion 31 and a power line of the U3 coil portion 33 are adjacent to each other in the circumferential direction at the first turn (first layer), and a power line of the U2 coil portion 32 and a power line of the U4 coil portion 34 are adjacent to each other in the circumferential direction at the sixth turn (sixth layer). A neutral line of the U1 coil portion 31 and a neutral line of the U3 coil portion 33 are adjacent to each other in the circumferential direction at the sixth turn from a slot different from a slot in which the power line is disposed. A neutral line of the U2 coil portion 32 and a neutral line of the U4 coil portion 34 are adjacent to each other in the circumferential direction at the first turn from a slot different from a slot in which the power line is disposed.

In the present embodiment, the crossover portions 22 on the Z2 side are joined at a circumferential intermediate position. In Figs. 5 to 12, each joint portion 90 related to the crossover portions 22 on the Z2 side is schematically illustrated by a black dot (only some of the joint portion 90 is indicated by reference sign 90). For example, the crossover portion 22 on the Z2 side between the slot 11 #42 and the slot 11 #48 has the joint portion 90 at a circumferential position corresponding to the slot 11 #45. The crossover portion 22 on the Z2 side between the slot 11 #29 and the slot 11 #35 has the joint portion 90 at a circumferential position corresponding to the slot 11 #32.

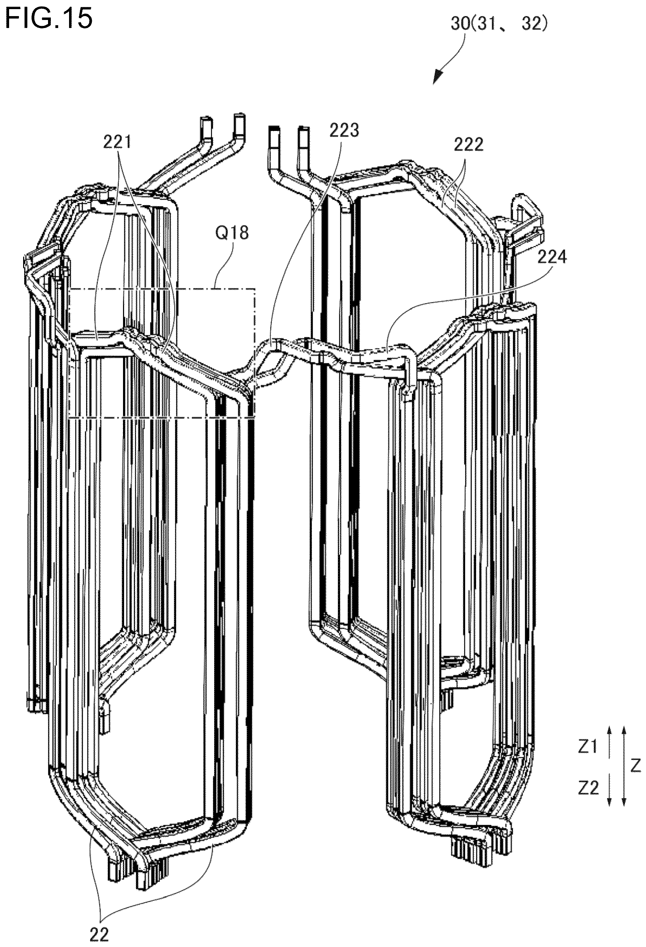

In the present embodiment, the crossover portion 22 on the Z1 side has four types of forms. Specifically, there are four types of the crossover portions 22 on the Z1 side, that is, a crossover portion 221, a crossover portion 222, a crossover portion 223, and a crossover portion 224 (see also Fig. 15). Accordingly, the number of molds for molding the crossover portion 22 on the Z1 side can be minimized.

The crossover portions 221 and the crossover portions 222 are formed continuously from a pair of slot accommodation portions 21 inserted into the slots 11 at a 6-slot pitch (an example of a standard slot pitch). The number "6" of the 6-slot pitch is a number corresponding to the number of slots/number of poles (48/8 in this example), and hereinafter, the 6-slot pitch is also referred to as the "standard slot pitch". The crossover portion 221 and the crossover portion 222 only have a difference in radial position and extend in the same circumferential range. For example, in the U1 coil portion 31, the crossover portion 221 and the crossover portion 222 extend between the slot 11 #5 and the slot 11 #11, between the slot 11 #18 and the slot 11 #24, between the slot 11 #29 and the slot 11 #35, and between the slot 11 #42 and the slot 11 #48.

Hereinafter, the crossover portion 221 and the crossover portion 222 are also referred to as a "standard pitch crossover portion 221" and a "standard pitch crossover portion 222", respectively.

The crossover portion 223 and the crossover portion 224 have a characteristic configuration that contributes to the above-described highly uniform parallel coil disposition.

Specifically, the crossover portion 223 is continuously formed from a pair of slot accommodation portions 21 inserted into the slots 11 (an example of the first slot) at a 7-slot pitch (an example of a first slot pitch) larger than the standard slot pitch by one slot. Hereinafter, the crossover portion 223 is also referred to as a "long-pitch crossover portion 223".

The pair of slot accommodation portions 21 continuous with the long-pitch crossover portion 223 are respectively disposed at an innermost radial position (that is, the sixth turn) and an outermost radial position (that is, the first turn).

Specifically, in the U1 coil portion 31, the long-pitch crossover portion 223 is formed continuously from the slot accommodation portion 21 in the slot 11 #11 and the slot accommodation portion 21 in the slot 11 #18. At this time, the slot accommodation portion 21 in the slot 11 #11 continuous with the long-pitch crossover portion 223 is disposed at the sixth turn. The slot accommodation portion 21 in the slot 11 #18 continuous with the long-pitch crossover portion 223 is disposed at the first turn.

In the U1 coil portion 31, the slot accommodation portion 21 at the sixth turn in the slot 11 #35 is connected to the neutral line terminal 62, and the slot accommodation portion 21 at the first turn in the slot 11 #42 is connected to the power line terminal 61. Therefore, in the U1 coil portion 31, there is only one long-pitch crossover portion 223.

In the U2 coil portion 32, there are two long-pitch crossover portions 223. The first long-pitch crossover portion 223 is formed continuously from the slot accommodation portion 21 at the sixth turn in the slot 11 #5 and the slot accommodation portion 21 at the first turn in the slot 11 #12. The second long-pitch crossover portion 223 is formed continuously from the slot accommodation portion 21 at the sixth turn in the slot 11 #29 and the slot accommodation portion 21 at the first turn in the slot 11 #36.

In the U3 coil portion 33, there are two long-pitch crossover portions 223. The first long-pitch crossover portion 223 is formed continuously from the slot accommodation portion 21 at the sixth turn in the slot 11 #47 and the slot accommodation portion 21 at the first turn in the slot 11 #6. The second long-pitch crossover portion 223 is formed continuously from the slot accommodation portion 21 at the sixth turn in the slot 11 #23 and the slot accommodation portion 21 at the first turn in the slot 11 #30.

In the U4 coil portion 34, the long-pitch crossover portion 223 is formed continuously from the slot accommodation portion 21 at the sixth turn in the slot 11 #17 and the slot accommodation portion 21 at the first turn in the slot 11 #24.

In the U4 coil portion 34, the slot accommodation portion 21 at the sixth turn in the slot 11 #41 is connected to the power line terminal 61, and the slot accommodation portion 21 at the first turn in the slot 11 #48 is connected to the neutral line terminal 62. Therefore, in the U4 coil portion 34, there is only one long-pitch crossover portion 223.

The crossover portion 224 is continuously formed from a pair of slot accommodation portions 21 inserted into the slots 11 at a 5-slot pitch (an example of a second slot pitch) smaller than the standard slot pitch by one slot. Hereinafter, the crossover portion 224 is also referred to as a "short-pitch crossover portion 224".

The pair of slot accommodation portions 21 continuous with the short-pitch crossover portion 224 are respectively disposed at the innermost radial position (that is, the sixth turn) and the outermost radial position (that is, the first turn).

Specifically, in the U1 coil portion 31, there are two short-pitch crossover portions 224. The first short-pitch crossover portion 224 is formed continuously from the slot accommodation portion 21 at the sixth turn in the slot 11 #24 and the slot accommodation portion 21 at the first turn in the slot 11 #29. The second short-pitch crossover portion 224 is formed continuously from the slot accommodation portion 21 at the sixth turn in the slot 11 #48 and the slot accommodation portion 21 at the first turn in the slot 11 #5.

In the U2 coil portion 32, the short-pitch crossover portion 224 is formed continuously from the slot accommodation portion 21 at the sixth turn in the slot 11 #18 and the slot accommodation portion 21 at the first turn in the slot 11 #23.

In the U2 coil portion 32, the slot accommodation portion 21 at the sixth turn in the slot 11 #42 is connected to the power line terminal 61, and the slot accommodation portion 21 at the first turn in the slot 11 #47 is connected to the neutral line terminal 62. Therefore, in the U2 coil portion 32, there is only one short-pitch crossover portion 224.

In the U3 coil portion 33, the short-pitch crossover portion 224 is formed continuously from the slot accommodation portion 21 at the sixth turn in the slot 11 #12 and the slot accommodation portion 21 at the first turn in the slot 11 #17.

In the U3 coil portion 33, the slot accommodation portion 21 at the sixth turn in the slot 11 #36 is connected to the neutral line terminal 62, and the slot accommodation portion 21 at the first turn in the slot 11 #41 is connected to the power line terminal 61. Therefore, in the U3 coil portion 33, there is only one short-pitch crossover portion 224.

In the U4 coil portion 34, there are two short-pitch crossover portions 224. The first short-pitch crossover portion 224 is formed continuously from the slot accommodation portion 21 at the sixth turn in the slot 11 #6 and the slot accommodation portion 21 at the first turn in the slot 11 #11. The second short-pitch crossover portion 224 is formed continuously from the slot accommodation portion 21 at the sixth turn in the slot 11 #30 and the slot accommodation portion 21 at the first turn in the slot 11 #35.

In the present embodiment, as described above, the U1 coil portion 31 and the U3 coil portion 33 are connected to the power line terminal 61 by a leader line from a radially outermost side, and the U2 coil portion 32 and the U4 coil portion 34 are connected to the power line terminal 61 by a leader line from a radially innermost side. Therefore, the U1 coil portion 31 and the U3 coil portion 33, and the U2 coil portion 32 and the U4 coil portion 34 have opposite current flow directions when viewed in the radial direction when a current flows from the power line to the neutral line.

In the present embodiment, the power line terminal 61 and the neutral line terminal 62 may be disposed in reverse. That is, the U1 coil portion 31 and the U3 coil portion 33 may be connected to the power line terminal 61 by a leader line from the radially innermost side, and the U2 coil portion 32 and the U4 coil portion 34 may be connected to the power line terminal 61 by a leader line from the radially outermost side.

Next, the stator coil 20 will be further described with reference to Fig. 14 and subsequent drawings.

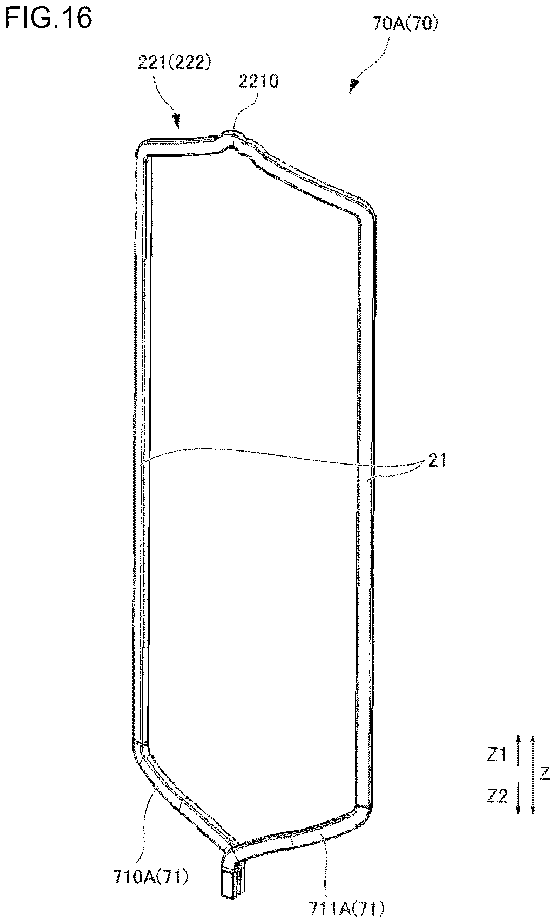

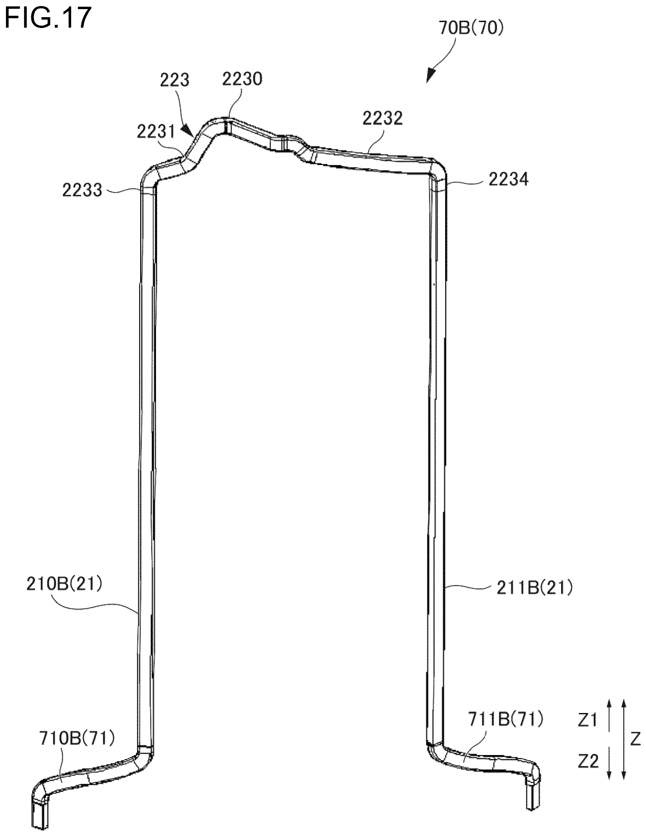

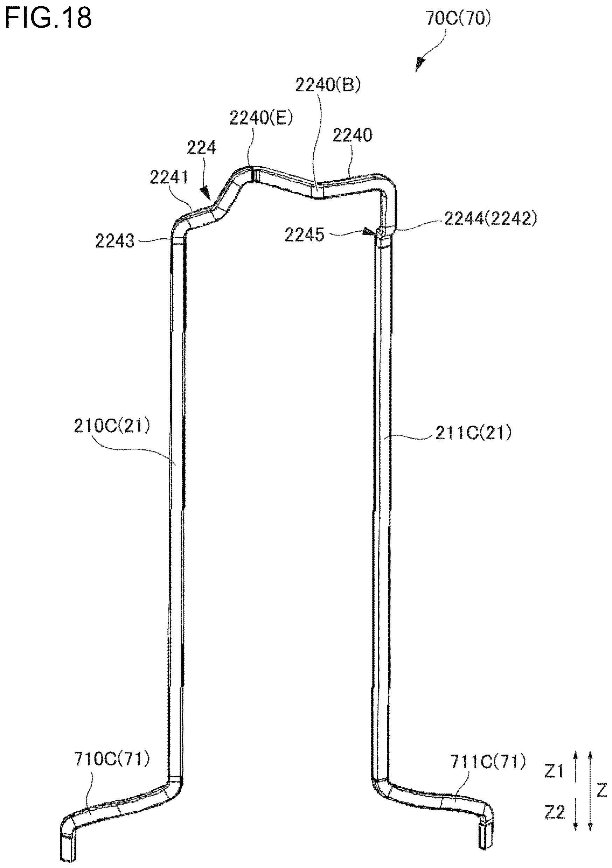

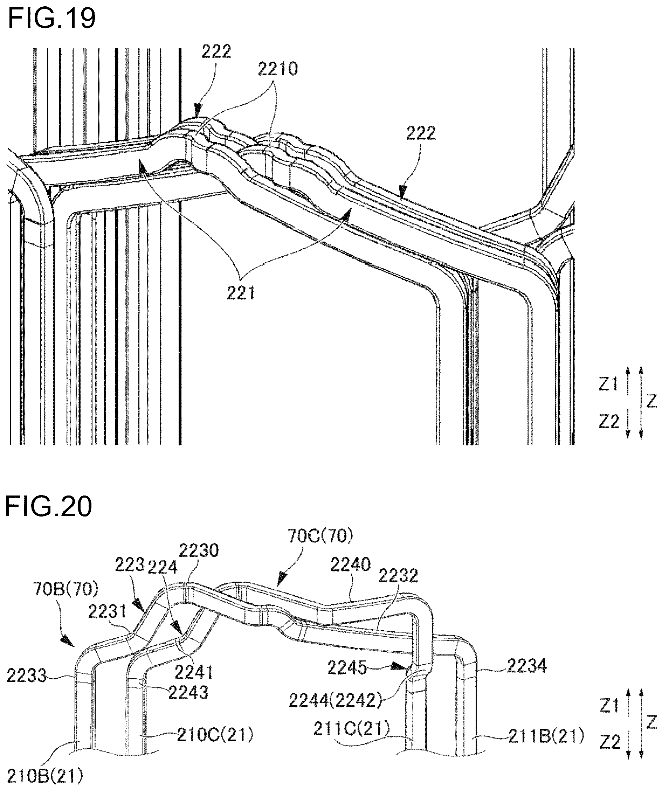

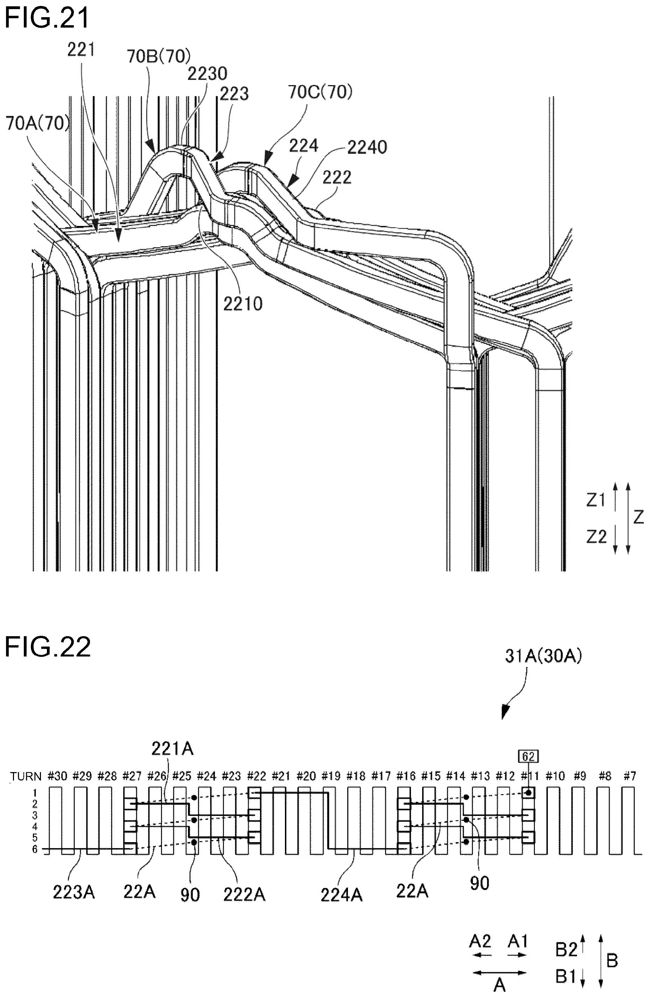

Fig. 14 is a perspective view illustrating all the coil pieces 70 forming the U-phase coil 30 taken out. Fig. 15 is a perspective view illustrating the U1 coil portion 31 and the U2 coil portion 32 of the U-phase coil 30 taken out. Fig. 16 is a perspective view of the coil piece 70 including the standard pitch crossover portion 221. Fig. 17 is a perspective view of the coil piece 70 including the long-pitch crossover portion 223. Fig. 18 is a perspective view of the coil piece 70 including the short-pitch crossover portion 224. Fig. 19 is an enlarged view of a portion Q18 in Fig. 15. Fig. 20 is a perspective view illustrating a relationship between the long-pitch crossover portion 223 and the short-pitch crossover portion 224 with respect to the U1 coil portion 31 and the U2 coil portion 32. Fig. 21 is a perspective view illustrating a relationship between the standard pitch crossover portions 221 and 222 of the U3 coil portion 33 and the U4 coil portion 34 and the long-pitch crossover portion 223 and the short-pitch crossover portion 224 of the U1 coil portion 31 and the U2 coil portion 32.

As illustrated in Fig. 14, the U-phase coil 30 is formed by disposing a plurality of types of coil pieces 70 and joining the leg portions 71 to each other in the radial direction on the Z2 side at the joint portion 90. In the present embodiment, the joint portions 90 are formed side by side in the radial direction (see also Figs. 5 to 12).

The plurality of types of coil pieces 70 include a coil piece 70 (also referred to as a "coil piece 70A" for distinction) including the standard pitch crossover portion 221 or 222 (see Fig. 16), a coil piece 70 (also referred to as a "coil piece 70B" for distinction) including the long-pitch crossover portion 223 (see Fig. 17), and a coil piece 70 (also referred to as a "coil piece 70C" for distinction) including the short-pitch crossover portion 224 (see Fig. 18).

Two types of coil pieces 70A are prepared according to a difference in the radial position (turn position) at which the coil pieces 70A are inserted. The two types of coil pieces 70A are slightly different from each other in size in the circumferential direction, and therefore, hereinafter, unless otherwise specified, the coil piece including the standard pitch crossover portion 221 will be described.

The coil piece 70A includes a pair of slot accommodation portions 21. As described above, the pair of slot accommodation portions 21 are inserted into two slots 11 separated by the number of slots corresponding to the standard slot pitch in the circumferential direction.

As illustrated in Fig. 16, the coil piece 70A includes the standard pitch crossover portion 221 on the Z1 side. The standard pitch crossover portion 221 is bent so as to be offset in the radial direction by one turn.

The standard pitch crossover portion 221 includes a head top portion 2210 located on an axially outermost side. The head top portion 2210 is set at or near a circumferential intermediate position of the coil piece 70A.

As illustrated in Fig. 19, the coil pieces 70A are disposed in staggered parallel disposition and offset in the radial direction and the circumferential direction. For example, the coil piece 70A of the U1 coil portion 31 and the coil piece 70A of the U3 coil portion 33 may be disposed such that the standard pitch crossover portions 221 are shifted by one slot in the circumferential direction and shifted by one turn in the radial direction as illustrated in Fig. 19.

As illustrated in Fig. 16, the coil piece 70A includes two leg portions 71 (also referred to as "leg portions 710A and 711A" for distinction) continuous from the pair of slot accommodation portions 21 on the Z2 side. The leg portions 710A and 711A are bent in a direction approaching each other in the circumferential direction (that is, in the circumferential direction while extending in opposite directions). The joint portion 90 related to the coil piece 70A is set at or near the circumferential intermediate position of the coil piece 70A (see Fig. 5 and the like). The coil pieces 70A inserted into the same pair of slots 11 are joined to each other so as to be electrically connected in series in the same phase. The joint portions 90 of the coil pieces 70A inserted into the same pair of slots 11 are aligned in the radial direction at the same circumferential position (see Fig. 14).

As illustrated in Fig. 17, the coil piece 70B includes a pair of slot accommodation portions 21 (hereinafter also referred to as "slot accommodation portions 210B and 211B" when distinction is made). As described above, the slot accommodation portions 210B and 211B are inserted into two slots 11 separated by seven slots in the circumferential direction.

As illustrated in Fig. 17, the coil piece 70B includes the long-pitch crossover portion 223 on the Z1 side. As described above, the long-pitch crossover portion 223 is bent so as to be offset in the radial direction by six turns.

The long-pitch crossover portion 223 includes a head top portion 2230 (hereinafter, also referred to as a "long-pitch head top portion 2230") located on the axially outermost side. The long-pitch head top portion 2230 extends in the radial direction and the circumferential direction. The long-pitch head top portion 2230 is set at a position offset in the circumferential direction from a circumferential intermediate position of the coil piece 70B. Specifically, the long-pitch head top portion 2230 is located on a side close to the slot accommodation portion 210B in the circumferential direction with respect to the circumferential intermediate position of the coil piece 70B. Unlike a short-pitch head top portion 2240 described later, the long-pitch head top portion 2230 extends over a relatively short circumferential section.

The long-pitch crossover portion 223 includes non-head top portions (hereinafter also referred to as "long-pitch non-head top portions 2231 and 2232") on both sides of the long-pitch head top portion 2230 in the circumferential direction. The long-pitch non-head top portions 2231 and 2232 include root portions (hereinafter, also referred to as "long-pitch root portions 2233 and 2234") extending continuously from the slot accommodation portions 21 in the axial direction. The long-pitch root portions 2233 and 2234 have end portions at an axially inner side (boundary portions with the slot accommodation portions 21) located at the same radial positions as the slot accommodation portions 21, and extend in the axial direction from the end portions at the axially inner side to an axially outer side. Axial lengths of the long-pitch root portions 2233 and 2234 are relatively short. A portion of the long-pitch non-head top portion 2231 excluding the long-pitch root portion 2233 forms an oblique portion extending from the long-pitch root portion 2233 in the circumferential direction and to the axially outer side. Similarly, a portion of the long-pitch non-head top portion 2232 excluding the long-pitch root portion 2234 forms an oblique portion extending from the long-pitch root portion 2234 in the circumferential direction and to the axially outer side.

The long-pitch non-head top portion 2231 is offset radially inward by six turns relative to the long-pitch non-head top portion 2232. Such an offset may be achieved in a section related to the long-pitch head top portion 2230.

As illustrated in Fig. 17, the coil piece 70B includes two leg portions 71 (also referred to as "leg portions 710B and 711B" for distinction) continuous from the pair of slot accommodation portions 210B and 211B on the Z2 side. The leg portions 710B and 711B are bent in the circumferential direction so as to extend in opposite circumferential directions. On the Z2 side, the coil piece 70B is joined to the coil piece 70A (the coil piece 70A including the standard pitch crossover portion 221) at one end in the circumferential direction, and is joined to the coil piece 70A (the coil piece 70A including the standard pitch crossover portion 222) at the other end in the circumferential direction.

The coil piece 70C includes a pair of slot accommodation portions 21 (hereinafter, also referred to as "slot accommodation portions 210C and 211C" when distinction is made). As described above, the slot accommodation portions 210C and 211C are inserted into two slots 11 separated by five slots in the circumferential direction.

As illustrated in Fig. 18, the coil piece 70C includes the short-pitch crossover portion 224 on the Z1 side. As described above, the short-pitch crossover portion 224 is bent so as to be offset in the radial direction by six turns.

The short-pitch crossover portion 224 includes a head top portion 2240 (hereinafter also referred to as the "short-pitch head top portion 2240") located on the axially outermost side. The short-pitch head top portion 2240 extends in the radial direction and the circumferential direction. In the present embodiment, the short-pitch head top portion 2240 extends in the radial direction for seven turns. Specifically, the short-pitch head top portion 2240 includes a bent portion (indicated by 2240(B) in Fig. 18) that is bent radially outward between an end portion on a side close to the slot accommodation portion 211C and an end portion on a side close to the slot accommodation portion 210C (indicated by 2240(E) in Fig. 18). In this case, the short-pitch head top portion 2240 extends only in the circumferential direction from the bent portion (indicated by 2240(B) in Fig. 18) to the end portion on the side close to the slot accommodation portion 211C, and extends in the radial direction to the radially outer side while extending in the circumferential direction from the bent portion (indicated by 2240(B) in Fig. 18) to the end portion on the side close to the slot accommodation portion 210C (indicated by 2240(E) in Fig. 18). The end portion of the short-pitch head top portion 2240 on the side close to the slot accommodation portion 210C (indicated by 2240(E) in Fig. 18) is set at a position offset in the circumferential direction from a circumferential intermediate position of the coil piece 70C. Specifically, the end portion of the short-pitch head top portion 2240 (indicated by 2240(E) in Fig. 18) is located on the side close to the slot accommodation portion 210C in the circumferential direction with respect to the circumferential intermediate position of the coil piece 70C. Meanwhile, the end portion of the short-pitch head top portion 2240 on the side close to the slot accommodation portion 211C is located near the circumferential position of the slot accommodation portion 211C.

The short-pitch crossover portion 224 includes non-head top portions (hereinafter also referred to as "short-pitch non-head top portions 2241 and 2242") on both sides of the short-pitch head top portion 2240 in the circumferential direction. The short-pitch non-head top portions 2241 and 2242 have root portions (hereinafter also referred to as "short-pitch root portions 2243 and 2244") extending continuously from the slot accommodation portions 21 in the axial direction. The short-pitch root portions 2243 and 2244 have end portions at the axially inner side (boundary portions with the slot accommodation portions 21) located at the same radial positions as the slot accommodation portions 21, and extend in the axial direction from the end portions at the axially inner side to the axially outer side. In the present embodiment, the short-pitch non-head top portion 2242 has substantially no portion extending in the circumferential direction and is formed of the short-pitch root portion 2244. Meanwhile, a portion of the short-pitch non-head top portion 2241 excluding the short-pitch root portion 2243 forms an oblique portion extending from the short-pitch root portion 2243 in the circumferential direction and to the axially outer side.

The short-pitch non-head top portion 2241 is offset radially inward by seven turns relative to the short-pitch non-head top portion 2242. Such an offset may be achieved by a section related to the short-pitch head top portion 2240.

As illustrated in Fig. 18, the coil piece 70C includes two leg portions 71 (also referred to as "leg portions 710C and 711C" for distinction) continuous from the pair of slot accommodation portions 210C and 211C on the Z2 side. The leg portions 710C and 711C are bent in the circumferential direction so as to extend in opposite circumferential directions. On the Z2 side, the coil piece 70C is joined to the coil piece 70A (the coil piece 70A including the standard pitch crossover portion 221) at one end in the circumferential direction, and is joined to the coil piece 70A (the coil piece 70A including the standard pitch crossover portion 222) at the other end in the circumferential direction.

Here, in the present embodiment, the coil piece 70C is disposed with respect to the coil piece 70B such that a circumferential range of the short-pitch crossover portion 224 is in a circumferential range of the long-pitch crossover portion 223. The slot 11 into which the slot accommodation portion 210C is inserted and the slot 11 into which the slot accommodation portion 210B is inserted are adjacent to each other in the circumferential direction, and the slot 11 into which the slot accommodation portion 211C is inserted and the slot 11 into which the slot accommodation portion 211B is inserted are adjacent to each other in the circumferential direction.

When such a relationship (disposition) between the long-pitch crossover portion 223 and the short-pitch crossover portion 224 is achieved, unlike a configuration of the present embodiment described below, the long-pitch crossover portion may extend to the axially outer side of the short-pitch crossover portion over the entire circumferential direction. However, in such a configuration, the long-pitch crossover portion and the short-pitch crossover portion have a two-story structure, which leads to an increase in an axial size.

In contrast, in the present embodiment, an increase in the axial size can be prevented by adopting the following configuration.

That is, in the present embodiment, the long-pitch head top portion 2230 and the short-pitch head top portion 2240 do not intersect when viewed in the axial direction as illustrated in Fig. 20. Accordingly, axial positions of the long-pitch head top portion 2230 and the short-pitch head top portion 2240 can be made the same, and as a result, the axial size can be reduced.

As illustrated in Fig. 21, the long-pitch head top portion 2230 and the short-pitch head top portion 2240 are located at the axially outer side of the head top portion 2210 of the standard pitch crossover portion 221. The coil piece 70B and the coil piece 70C extend in the circumferential direction so as to straddle the standard pitch crossover portion 221 in the radial direction from the axially outer side.

In the present embodiment, the long-pitch head top portion 2230 is located closer to the slot accommodation portion 210B in the circumferential direction than the short-pitch head top portion 2240. Accordingly, the long-pitch head top portion 2230 and the short-pitch head top portion 2240 do not overlap when viewed in the axial direction. However, in a modification, the disposition may be reversed. That is, the long-pitch head top portion 2230 may be located farther from the slot accommodation portion 210B in the circumferential direction than the short-pitch head top portion 2240.

In the present embodiment, the short-pitch root portion 2244 is offset radially outward in a middle thereof (within an axial range of the short-pitch root portion 2244). Specifically, the short-pitch root portion 2244 includes a bending portion 2245 bent radially outward, and by including the bending portion 2245, the short-pitch root portion 2244 is offset radially outward by approximately one turn. Accordingly, as illustrated in Fig. 20, the short-pitch root portion 2244 can intersect the long-pitch crossover portion 223 from the radially outer side when viewed in the radial direction from the radially outer side. The long-pitch non-head top portion 2232 of the long-pitch crossover portion 223 can extend in the circumferential direction to the long-pitch head top portion 2230 through the axially inner side of the short-pitch head top portion 2240 of the short-pitch crossover portion 224. In particular, in the present embodiment, since the short-pitch head top portion 2240 substantially starts from a circumferential position of the short-pitch root portion 2244, the long-pitch non-head top portion 2232 of the long-pitch crossover portion 223 easily passes through the axially inner side of the short-pitch head top portion 2240. Accordingly, it is possible to reduce the axial size while securing a necessary clearance between the long-pitch non-head top portion 2232 and the short-pitch head top portion 2240.

As illustrated in Fig. 20, the short-pitch root portion 2243 and the long-pitch root portion 2233 do not have offset in the radial direction like the bending portion 2245. The long-pitch non-head top portion 2231 of the long-pitch crossover portion 223 extends in the circumferential direction from the long-pitch root portion 2233 to the long-pitch head top portion 2230 through the axially outer side of the short-pitch non-head top portion 2241 of the short-pitch crossover portion 224.

In the present embodiment, the short-pitch root portion 2244 is offset radially outward relative to the slot accommodation portion 211C at the first turn, and is thereby offset radially outward relative to the slot accommodation portion 211B at the first turn. Since the short-pitch root portion 2244 is offset radially outward, an axial length thereof is set to be relatively long.

In the present embodiment, the short-pitch root portion 2244 is offset radially outward relative to the slot accommodation portion 211B at the first turn, but the short-pitch root portion 2243 may be offset radially inward relative to the slot accommodation portion 210B at the sixth turn. A configuration in which the root portion from the first turn, which is a radially outermost turn, is offset radially outward is more advantageous than a configuration in which the root portion from the sixth turn, which is a radially innermost turn, is offset radially inward because a positional relation with the rotor 150 is not restricted.

Next, another embodiment will be described with reference to Fig. 22 and subsequent drawings. Hereinafter, for distinction, the above-described embodiment is also referred to as "Embodiment 1", and the following other embodiments are also referred to as "Embodiment 2". In the following description of Embodiment 2, components that may be similar as those of Embodiment 1 described above are denoted by the same reference signs, and description thereof may be omitted.

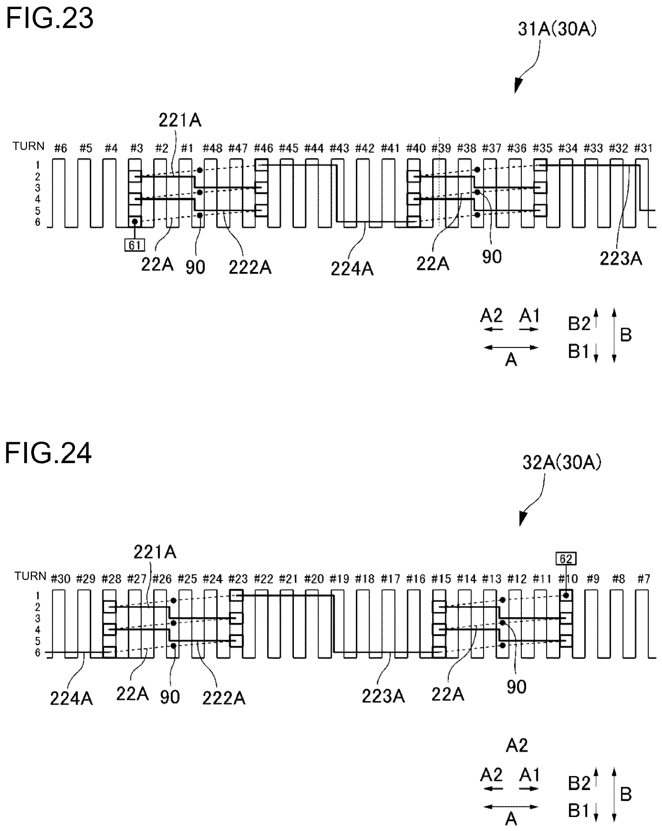

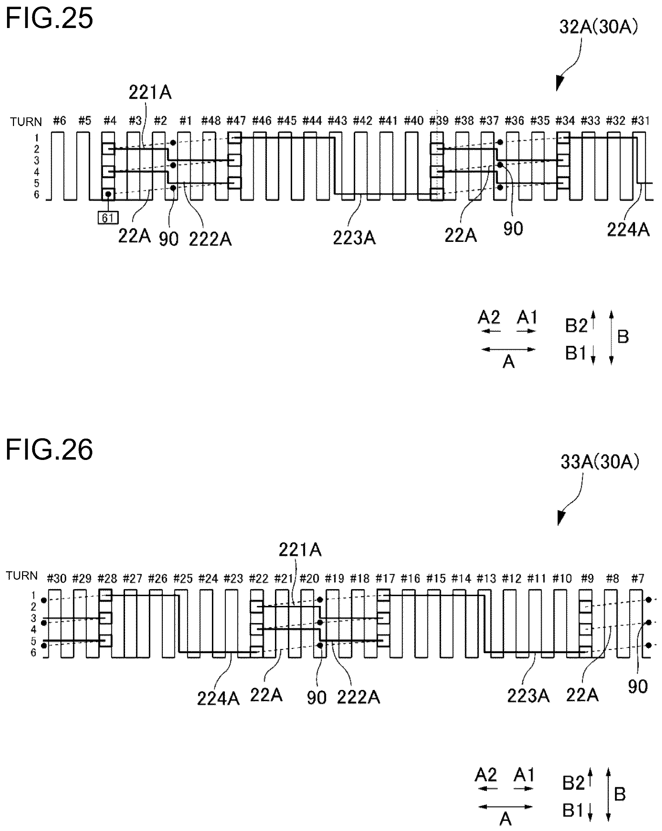

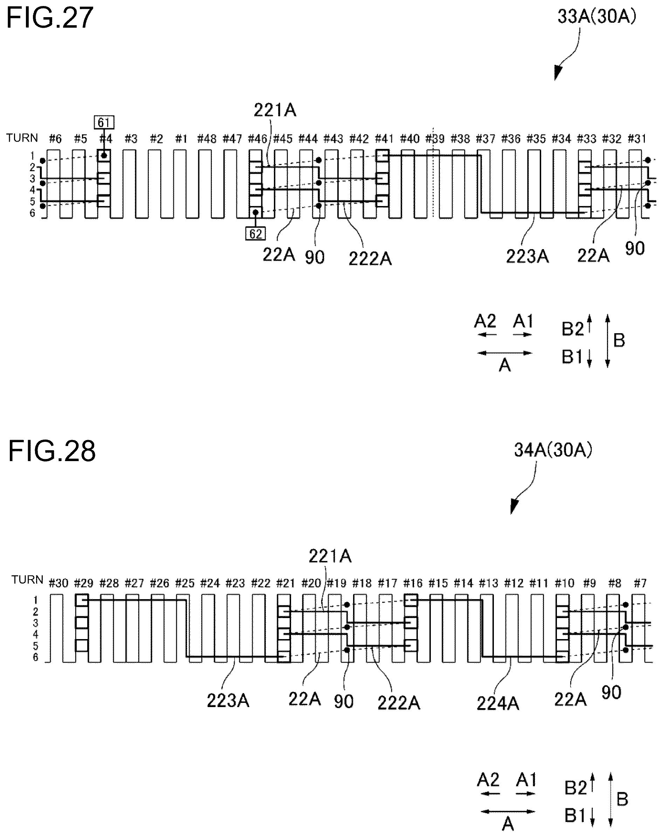

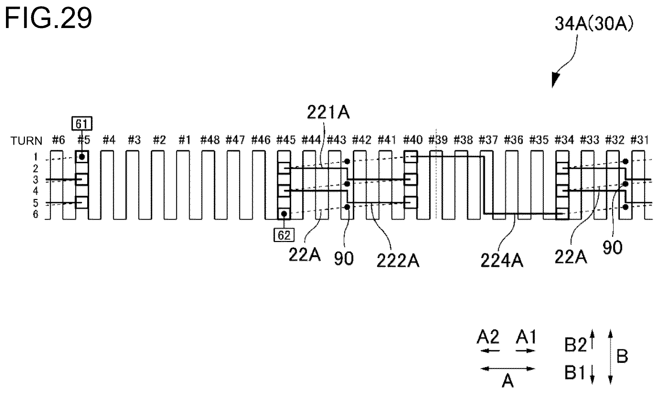

Figs. 22 and 23 are diagrams illustrating a configuration of a U1 coil portion 31A of a U-phase coil 30A. Figs. 24 and 25 are diagrams illustrating a configuration of a U2 coil portion 32A of the U-phase coil 30A. Figs. 26 and 27 are diagrams illustrating a configuration of a U3 coil portion 33A of the U-phase coil 30A. Figs. 28 and 29 are diagrams illustrating a configuration of a U4 coil portion 34A of the U-phase coil 30A.

In Figs. 22 to 29, meanings of the numerical value below the left character "turn" and the numerical value of the character "#" are similar as those in Figs. 5 to 12.

In Figs. 22 to 29, a crossover portion 22A on the Z1 side is indicated by a solid line, and the crossover portion 22A on the Z2 side is indicated by a dotted line.

Figs. 22 to 29 are diagrams illustrating the annular stator core 10 in an expanded form such that the upper-lower direction is the radial direction (B direction) of the stator core 10 and the left-right direction is the circumferential direction (A direction) of the stator core 10. That is, in Figs. 22 and 23, a right end of Fig. 22 and a left end of Fig. 23 are connected to each other, and a left end of Fig. 22 and a right end of Fig. 23 are connected to each other. The same applies to Figs. 24 and 25, Figs. 26 and 27, and Figs. 28 and 29. Although not illustrated, a V-phase coil 40A and a W-phase coil 50A are disposed in the stator core 10 while being shifted by two slots 11 and four slots 11 from the U-phase coil 30A, respectively.

In the present embodiment, the U-phase coil 30A is wound around the stator core 10 by a short-pitch lap winding. That is, the coil pitch is shorter than a pole pitch.

Specifically, as illustrated in Figs. 22 to 29, the U-phase coil 30A is disposed in slots 11 #3, #4, #5, #9, #10, #11, #15, #16, #17, #21, #22, #23, #27, #28, #29, #33, #34, #35, #39, #40, #41, #45, #46, and #47 among the 48 slots 11. Here, the slots 11 #3, #4, and #5, the slots 11 #9, #10, and #11, the slots 11 #15, #16, and #17, the slots 11 #21, #22, and #23, the slots 11 #27, #28, and #29, the slots 11 #33, #34, and #35, the slots 11 #39, #40, and #41, and the slots 11 #45, #46, and #47 are three slots 11 adjacent to each other in the circumferential direction (A direction) (examples of a first or fourth slot and a first end portion slot, a central slot, a second or third slot and a second end portion slot).

In the present embodiment, the U-phase coil 30A is disposed in six turns in the slots 11 #4, #10, #16, #22, #28, #34, #40, and #46 among the slots 11 #3, #4, #5, #9, #10, #11, #15, #16, #17, #21, #22, #23, #27, #28, #29, #33, #34, #35, #39, #40, #41, #45, #46, and #47. That is, in each of these slots 11, six slot accommodation portions 21 are disposed in a column in the radial direction. In the remaining slots 11, the U-phase coil 30A is disposed in three turns. That is, in each of these slots 11, the three slot accommodation portions 21 are disposed side by side in the radial direction with a space for one turn. In the space for one turn, the slot accommodation portions 21 for coils of the other phases (the V-phase coil 40A and the W-phase coil 50A) are disposed.

Here, in the present embodiment, as described above, the slot accommodation portions 21 of the U-phase coil 30A are inserted into three slots 11 adjacent to each other in the circumferential direction (A direction). The three slots 11 are periodically disposed along the circumferential direction at a 6-slot pitch (at intervals of four slots). Hereinafter, among the three slots 11 adjacent to each other in the circumferential direction (A direction), the slot 11 at a center in the circumferential direction is also referred to as a "central slot 11". Of the slots 11 on both sides of the central slot 11, the slot 11 closer to the slot #1 in ascending order is also referred to as a "first side slot 11", and the slot 11 farther from the slot #1 is also referred to as a "second side slot 11".

In the present embodiment, in each of the U1 coil portion 31A, the U2 coil portion 32A, the U3 coil portion 33A, and the U4 coil portion 34A, the plurality of slot accommodation portions 21 are not collectively inserted into the central slot 11, and the plurality of slot accommodation portions 21 are not collectively inserted into one of the first side slot 11 and the second side slot 11. That is, the plurality of slot accommodation portions 21 are inserted in a distributed manner into the central slot 11, the first side slot 11, and the second side slot 11.

Specifically, in the U1 coil portion 31A, the slot accommodation portions 21 are inserted into the slots 11 #3, #11, #16, #22, #27, #35, #40, and #46. That is, the slot accommodation portions 21 are evenly distributed among the four central slots 11, the two first side slots 11, and the two second side slots 11. The U1 coil portion 31A is wound from the neutral line terminal 62 in the A2 direction, and is lap-wound clockwise when viewed in the B2 direction.

In the U2 coil portion 32A, the slot accommodation portions 21 are inserted into the slots 11 #4, #10, #15, #23, #28, #34, #39, and #47. That is, the slot accommodation portions 21 are evenly distributed among the four central slots 11, the two first side slots 11, and the two second side slots 11. The U2 coil portion 32A is wound from the neutral line terminal 62 in the A2 direction, and is lap-wound clockwise when viewed in the B2 direction.

In the U3 coil portion 33A, the slot accommodation portions 21 are inserted into the slots 11 #4, #9, #17, #22, #28, #33, #41, and #46. That is, the slot accommodation portions 21 are evenly distributed among the four central slots 11, the two first side slots 11, and the two second side slots 11. The U3 coil portion 33A is wound from the neutral line terminal 62 in the A1 direction, and is lap-wound counterclockwise when viewed in the B2 direction.

In the U4 coil portion 34A, the slot accommodation portions 21 are inserted into the slots 11 #5, #10, #16, #21, #29, #34, #40, and #45. That is, the slot accommodation portions 21 are evenly distributed among the four central slots 11, the two first side slots 11, and the two second side slots 11. The U4 coil portion 34A is wound from the neutral line terminal 62 in the A1 direction, and is lap-wound counterclockwise when viewed in the B2 direction.

In this way, according to the present embodiment, in the U1 coil portion 31A, the U2 coil portion 32A, the U3 coil portion 33A, and the U4 coil portion 34A, the plurality of slot accommodation portions 21 are inserted in a distributed manner in the central slot 11, the first side slots 11, and the second side slots 11. Accordingly, the circulating current can be reduced as in Embodiment 1.

In the present embodiment, the U1 coil portion 31A, the U2 coil portion 32A, the U3 coil portion 33A, and the U4 coil portion 34A do not adopt a configuration in which the plurality of slot accommodation portions 21 are collectively inserted at the turn positions 1 to 3 or the turn positions 4 to 6 among the six turns. That is, the U1 coil portion 31A, the U2 coil portion 32A, the U3 coil portion 33A, and the U4 coil portion 34A each have a configuration in which the plurality of slot accommodation portions 21 are inserted in a distributed manner at the turn positions 1 to 6.

Specifically, in the U1 coil portion 31A, in the slots 11 #11, #22, #35, and #46 among the slots 11 #3, #11, #16, #22, #27, #35, #40, and #46, the slot accommodation portions 21 are inserted at radial positions corresponding to the first, third, and fifth turns. In the remaining slots 11 #3, #16, #27, and #40, the slot accommodation portions 21 are inserted at radial positions corresponding to the second, fourth, and sixth turns.

In the U2 coil portion 32A, in the slots 11 #10, #23, #34, and #47 among the slots 11 #4, #10, #15, #23, #28, #34, #39, and #47, the slot accommodation portions 21 are inserted at radial positions corresponding to the first, third, and fifth turns. In the remaining slots 11 #4, #15, #28, and #39, the slot accommodation portions 21 are inserted at radial positions corresponding to the second, fourth, and sixth turns.

The same applies to the U3 coil portion 33A and the U4 coil portion 34A.

In this way, according to the present embodiment, in the U1 coil portion 31A, the U2 coil portion 32A, the U3 coil portion 33A, and the U4 coil portion 34A, the plurality of slot accommodation portions 21 are inserted in a distributed manner at turn positions 1 to 6. Accordingly, the circulating current can be reduced as in Embodiment 1.

In the present embodiment, the U1 coil portion 31A, the U2 coil portion 32A, the U3 coil portion 33A, and the U4 coil portion 34A do not adopt a configuration in which the slot accommodation portions 21 for six turns are collectively inserted into the corresponding slot 11. That is, the U1 coil portion 31A, the U2 coil portion 32A, the U3 coil portion 33A, and the U4 coil portion 34A each have a configuration in which the slot accommodation portions 21 for three turns are inserted into the corresponding slot 11. Accordingly, in the U1 coil portion 31A, the U2 coil portion 32A, the U3 coil portion 33A, and the U4 coil portion 34A, the plurality of slot accommodation portions 21 are disposed substantially uniformly over an entire circumference of 360 degrees. Accordingly, the circulating current can be reduced as in Embodiment 1.

Thus, according to the present embodiment, similarly to Embodiment 1 described above, a characteristic configuration contributing to minimization of the difference in the back electromotive voltage (a configuration for enhancing uniformity of a parallel coil disposition in the circumferential direction, the radial direction, and the axial direction), that is, "highly uniform parallel coil disposition" is achieved.

Here, in the present embodiment, a power line of the U1 coil portion 31A and a power line of the U2 coil portion 32A are adjacent to each other in the circumferential direction at the sixth turn (sixth layer), and a power line of the U3 coil portion 33A and a power line of the U4 coil portion 34A are adjacent to each other in the circumferential direction at the first turn (first layer). A neutral line of the U1 coil portion 31A and a neutral line of the U2 coil portion 32A are adjacent to each other in the circumferential direction at the first turn from a slot different from a slot in which the power line is disposed. A neutral line of the U3 coil portion 33A and a neutral line of the U4 coil portion 34A are adjacent to each other in the circumferential direction at the sixth turn from a slot different from a slot in which the power line is disposed.

In the present embodiment as well, the crossover portions 22A on the Z2 side are joined at a circumferential intermediate position. In Fig. 22 to Fig. 29, each of the joint portion 90 related to the crossover portions 22A on the Z2 side is schematically illustrated by a black dot (only some of the joint portion 90 is indicated by reference sign 90). For example, the crossover portion 22A on the Z2 side between the slot 11 #11 and the slot 11 #16 has the joint portion 90 at a circumferential intermediate position between the slot 11 #13 and the slot 11 #14.

In the present embodiment, the crossover portion 22A on the Z1 side has four types of forms. Specifically, there are four types of crossover portions 22A on the Z1 side, that is, a crossover portion 221A, a crossover portion 222A, a crossover portion 223A, and a crossover portion 224A. Accordingly, the number of molds for molding the crossover portion 22A on the Z1 side can be minimized.

The crossover portion 221A and the crossover portion 222A are formed continuously from a pair of slot accommodation portions 21 inserted into the slots 11 at a 5-slot pitch (an example of the standard slot pitch). The number "5" of the 5-slot pitch is a number smaller than the number of slots/number of poles (48/8 in this example), and hereinafter, the 5-slot pitch is also referred to as a "short-segment slot pitch". The crossover portions 221A and the crossover portions 222A only have a difference in radial position and extend in the same circumferential range. For example, in the U1 coil portion 31A, the crossover portion 221A and the crossover portion 222A extend between the slot 11 #11 and the slot 11 #16, between the slot 11 #22 and the slot 11 #27, between the slot 11 #35 and the slot 11 #40, and between the slot 11 #46 and the slot 11 #3.

The crossover portion 223A and the crossover portion 224A have a characteristic configuration that contributes to the above-described highly uniform parallel coil disposition.

Specifically, the crossover portion 223A is continuously formed from the pair of slot accommodation portions 21 inserted into the slots 11 at an 8-slot pitch (an example of the first slot pitch) larger than the short-segment slot pitch by three slots. Hereinafter, the crossover portion 223A is also referred to as a "long-pitch crossover portion 223A".

The pair of slot accommodation portions 21 continuous with the long-pitch crossover portion 223A are respectively disposed at the innermost radial position (that is, the sixth turn) and the outermost radial position (that is, the first turn).

Specifically, in the U1 coil portion 31A, the long-pitch crossover portion 223A is formed continuously from the slot accommodation portion 21 in the slot 11 #27 and the slot accommodation portion 21 in the slot 11 #35. At this time, the slot accommodation portion 21 in the slot 11 #27 continuous with the long-pitch crossover portion 223A is disposed at the sixth turn. The slot accommodation portion 21 in the slot 11 #35 continuous with the long-pitch crossover portion 223A is disposed at the first turn.

In the U1 coil portion 31A, the slot accommodation portion 21 at the sixth turn in the slot 11 #3 is connected to the power line terminal 61, and the slot accommodation portion 21 at the first turn in the slot 11 #11 is connected to the neutral line terminal 62. Therefore, in the U1 coil portion 31A, there is only one long-pitch crossover portion 223A.

In the U2 coil portion 32A, there are two long-pitch crossover portions 223A. The first long-pitch crossover portion 223A is formed continuously from the slot accommodation portion 21 at the sixth turn in the slot 11 #15 and the slot accommodation portion 21 at the first turn in the slot 11 #23. The second long-pitch crossover portion 223A is formed continuously from the slot accommodation portion 21 at the sixth turn in the slot 11 #39 and the slot accommodation portion 21 at the first turn in the slot 11 #47.

In the U3 coil portion 33A, there are two long-pitch crossover portions 223A. The first long-pitch crossover portion 223A is formed continuously from the slot accommodation portion 21 at the sixth turn in the slot 11 #9 and the slot accommodation portion 21 at the first turn in the slot 11 #17. The second long-pitch crossover portion 223A is formed continuously from the slot accommodation portion 21 at the sixth turn in the slot 11 #33 and the slot accommodation portion 21 at the first turn in the slot 11 #41.

In the U4 coil portion 34A, the long-pitch crossover portion 223A is formed continuously from the slot accommodation portion 21 at the sixth turn in the slot 11 #21 and the slot accommodation portion 21 at the first turn in the slot 11 #29.

In the U4 coil portion 34A, the slot accommodation portion 21 at the sixth turn in the slot 11 #45 is connected to the neutral line terminal 62, and the slot accommodation portion 21 at the first turn in the slot 11 #5 is connected to the power line terminal 61. Therefore, in the U4 coil portion 34A, there is only one long-pitch crossover portion 223A.

The crossover portion 224A is continuously formed from the pair of slot accommodation portions 21 inserted into the slots 11 (an example of the second slot) at a 6-slot pitch (an example of the second slot pitch) larger than the short-segment slot pitch by one slot. Hereinafter, the crossover portion 224A is also referred to as a "short-pitch crossover portion 224A".

The pair of slot accommodation portions 21 continuous with the short-pitch crossover portion 224A are respectively disposed at the innermost radial position (that is, the sixth turn) and the outermost radial position (that is, the first turn).

Specifically, in the U1 coil portion 31A, there are two short-pitch crossover portions 224A. The first short-pitch crossover portion 224A is formed continuously from the slot accommodation portion 21 at the sixth turn in the slot 11 #16 and the slot accommodation portion 21 at the first turn in the slot 11 #22. The second short-pitch crossover portion 224A is formed continuously from the slot accommodation portion 21 at the sixth turn in the slot 11 #40 and the slot accommodation portion 21 at the first turn in the slot 11 #46.

In the U2 coil portion 32A, the short-pitch crossover portion 224A is formed continuously from the slot accommodation portion 21 at the sixth turn in the slot 11 #28 and the slot accommodation portion 21 at the first turn in the slot 11 #34.

In the U2 coil portion 32A, the slot accommodation portion 21 at the sixth turn in the slot 11 #4 is connected to the power line terminal 61, and the slot accommodation portion 21 at the first turn in the slot 11 #10 is connected to the neutral line terminal 62. Therefore, in the U2 coil portion 32A, there is only one short-pitch crossover portion 224A.

In the U3 coil portion 33A, the short-pitch crossover portion 224A is formed continuously from the slot accommodation portion 21 at the sixth turn in the slot 11 #22 and the slot accommodation portion 21 at the first turn in the slot 11 #28.

In the U3 coil portion 33A, the slot accommodation portion 21 at the sixth turn in the slot 11 #46 is connected to the neutral line terminal 62, and the slot accommodation portion 21 at the first turn in the slot 11 #4 is connected to the power line terminal 61. Therefore, in the U3 coil portion 33A, there is only one short-pitch crossover portion 224A.

In the U4 coil portion 34A, there are two short-pitch crossover portions 224A. The first short-pitch crossover portion 224A is formed continuously from the slot accommodation portion 21 at the sixth turn in the slot 11 #10 and the slot accommodation portion 21 at the first turn in the slot 11 #16. The second short-pitch crossover portion 224A is formed continuously from the slot accommodation portion 21 at the sixth turn in the slot 11 #34 and the slot accommodation portion 21 at the first turn in the slot 11 #40.

In the present embodiment as well, a coil piece including the crossover portion 221A (not illustrated) and a coil piece including the crossover portion 222A (not illustrated) include the pair of slot accommodation portions 21 to be inserted into the same slot 11. One end of a coil piece including the long-pitch crossover portion 223A (not illustrated) is joined to the coil piece including the crossover portion 221A (not illustrated), and the other end thereof is joined to the coil piece including the crossover portion 222A (not illustrated). Similarly, one end of a coil piece including the short-pitch crossover portion 224A (not illustrated) is joined to the coil piece including the crossover portion 221A (not illustrated), and the other end thereof is joined to the coil piece including the crossover portion 222A (not illustrated).

In the present embodiment as well, the coil piece including the long-pitch crossover portion 223A (not illustrated) and the coil piece including the short-pitch crossover portion 224A (not illustrated) can have similar features as the coil piece 70B and the coil piece 70C according to Embodiment 1 described above.

For example, although not illustrated, the coil piece including the long-pitch crossover portion 223A (not illustrated) and the coil piece including the short-pitch crossover portion 224A (not illustrated) can be disposed such that their head top portions are located at the same axial position. That is, axial positions of the head top portions can be made the same, and as a result, the axial size can be reduced.

A root portion of the coil piece including the short-pitch crossover portion 224A (not illustrated) may be offset radially outward relative to the slot accommodation portion 211B at the first turn. Accordingly, the short-pitch crossover portion 224A can intersect the long-pitch crossover portion 223A from the radially outer side at the root portion thereof when viewed in the radial direction from the radially outer side. A non-head top portion of the long-pitch crossover portion 223A can extend in the circumferential direction to the head top portion thereof through the axially inner side of a non-head top portion of the short-pitch crossover portion 224A.

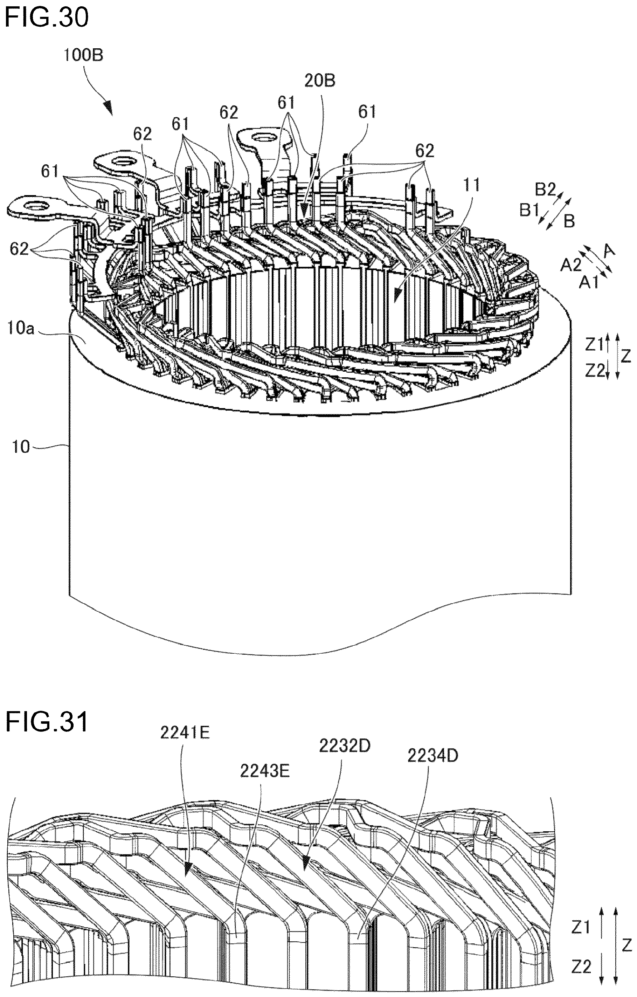

Next, another embodiment (hereinafter, referred to as "Embodiment 3") will be described with reference to Fig. 30 and subsequent drawings.

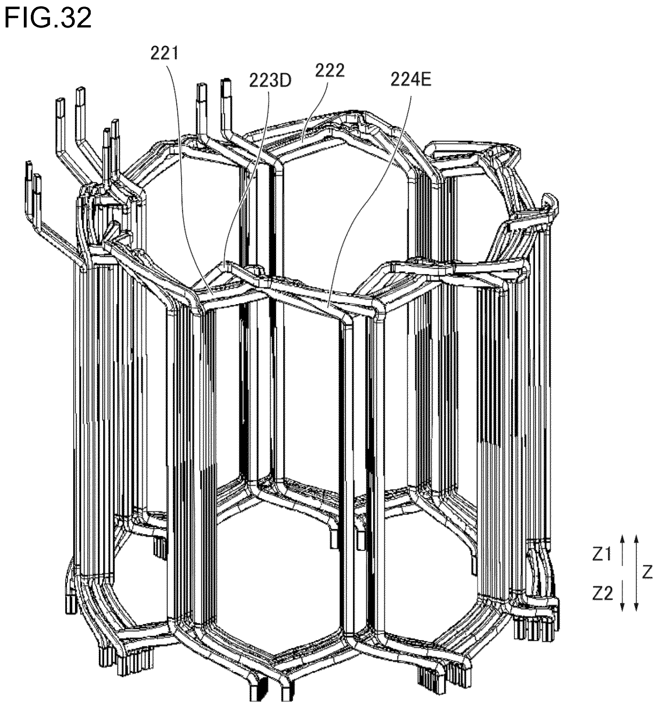

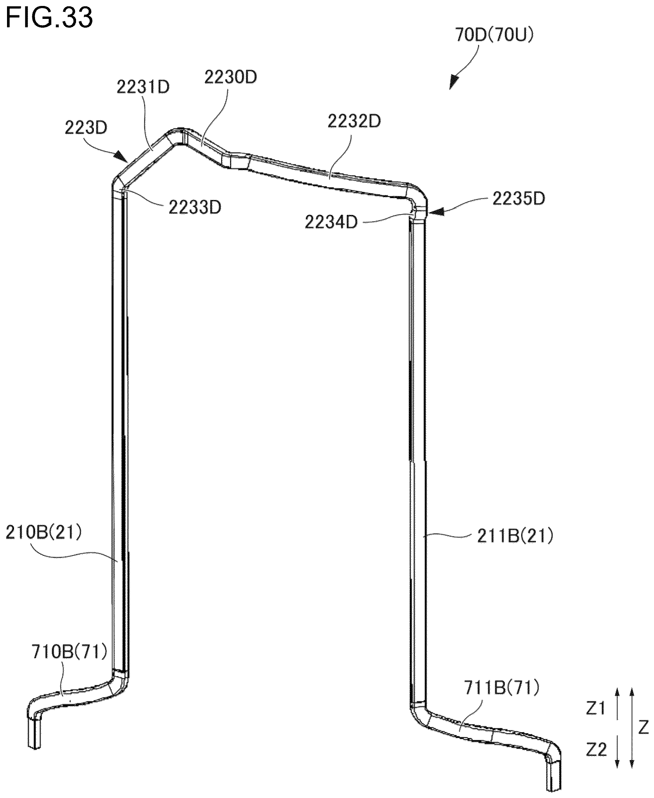

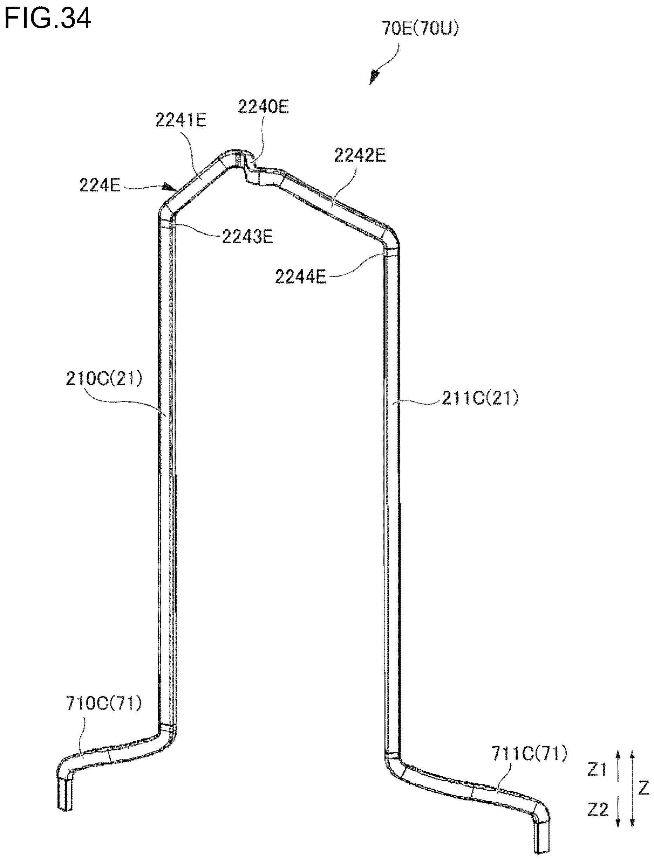

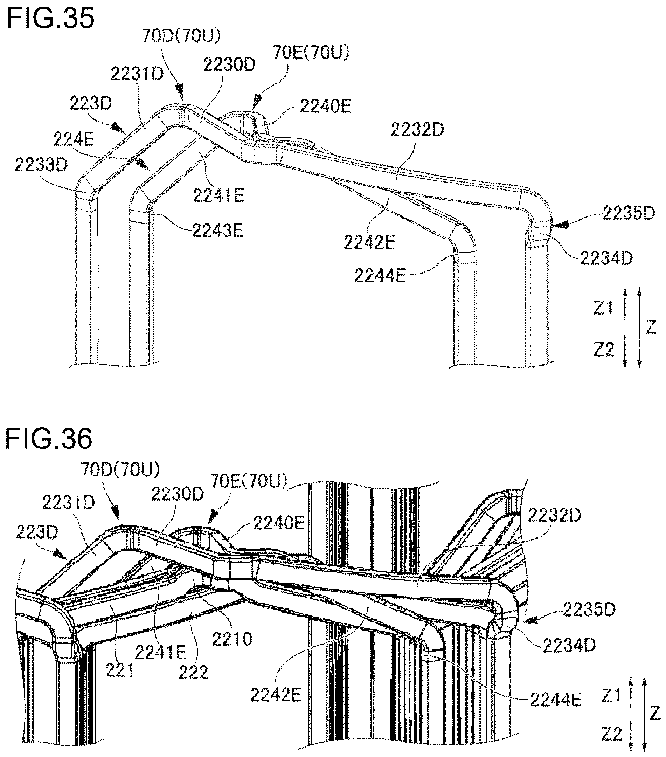

Fig. 30 is a perspective view of a stator 100B according to Embodiment 3. Fig. 31 is an enlarged view of a stator coil 20B according to Embodiment 3 as viewed from the radially inner side. Fig. 32 is a perspective view of all coil pieces 70U forming a U-phase coil 30U of the stator coil 20B according to Embodiment 3 taken out. Fig. 33 is a perspective view of the coil piece 70U including a long-pitch crossover portion 223D (also referred to as a "coil piece 70D" for distinction). Fig. 34 is a perspective view of the coil piece 70U including a short-pitch crossover portion 224E (also referred to as a "coil piece 70E" for distinction). Fig. 35 is a perspective view illustrating a relationship between the long-pitch crossover portion 223D and the short-pitch crossover portion 224E with respect to a U1 coil portion 31U and a U2 coil portion 32U. Fig. 36 is a perspective view illustrating a relationship between the standard pitch crossover portions 221 and 222 of a U3 coil portion 33U and a U4 coil portion 34U and the long-pitch crossover portion 223D and the short-pitch crossover portion 224E of the U1 coil portion 31U and the U2 coil portion 32U.

The stator 100B according to Embodiment 3 is different from the stator 100 according to Embodiment 1 described above in that the stator coil 20 is replaced with the stator coil 20B.

The stator coil 20B according to Embodiment 3 is different from the stator coil 20 according to Embodiment 1 described above mainly in that the coil piece 70B is replaced with the coil piece 70D and the coil piece 70C is replaced with the coil piece 70E.

In the following description of the coil piece 70D, components that may be similar as those of the coil piece 70B according to Embodiment 1 described above are denoted by the same reference signs, and description thereof may be omitted. Similarly, in the following description of the coil piece 70E, components that may be similar as those of the coil piece 70B according to Embodiment 1 described above are denoted by the same reference signs, and description thereof may be omitted.

The coil piece 70D includes a pair of slot accommodation portions 21 (slot accommodation portions 210B and 211B).

As illustrated in Fig. 33, the coil piece 70D includes the long-pitch crossover portion 223D on the Z1 side. In Embodiment 3, the long-pitch crossover portion 223D is bent so as to be offset in the radial direction by seven turns.

The long-pitch crossover portion 223D includes a head top portion 2230D (hereinafter, also referred to as a "long-pitch head top portion 2230D") located on the axially outermost side. The long-pitch head top portion 2230D is set at a position offset in the circumferential direction from a circumferential intermediate position of the coil piece 70D. Specifically, the long-pitch head top portion 2230D is located on a side close to the slot accommodation portion 210B in the circumferential direction with respect to the circumferential intermediate position of the coil piece 70D. Unlike a short-pitch head top portion 2240E described later, the long-pitch head top portion 2230D extends over a relatively long circumferential section.

The long-pitch crossover portion 223D includes non-head top portions (hereinafter also referred to as "long-pitch non-head top portions 2231D and 2232D") on both sides of the long-pitch head top portion 2230D in the circumferential direction. The long-pitch non-head top portions 2231D and 2232D include root portions (hereinafter, also referred to as "long-pitch root portions 2233D and 2234D") extending continuously from the slot accommodation portions in the axial direction. The long-pitch root portions 2233D and 2234D extend in the axial direction. A portion of the long-pitch non-head top portion 2231D excluding the long-pitch root portion 2233D forms an oblique portion extending from the long-pitch root portion 2233D in the circumferential direction and to the axially outer side. Similarly, a portion of the long-pitch non-head top portion 2232D excluding the long-pitch root portion 2234D forms an oblique portion extending from the long-pitch root portion 2234D in the circumferential direction and to the axially outer side.

The long-pitch non-head top portion 2231D is offset radially inward by seven turns relative to the long-pitch non-head top portion 2232D. Such an offset may be achieved in a section of the long-pitch head top portion 2230D.

As illustrated in Fig. 33, the coil piece 70D includes the two leg portions 71 (leg portions 710B and 711B) continuous from the pair of slot accommodation portions 210B and 211B on the Z2 side. The leg portions 710B and 711B are bent in the circumferential direction so as to extend in opposite circumferential directions. On the Z2 side, the coil piece 70D is joined to the coil piece 70A (the coil piece 70A including the standard pitch crossover portion 221) at one end in the circumferential direction, and is joined to the coil piece 70A (the coil piece 70A including the standard pitch crossover portion 222) at the other end in the circumferential direction.

As illustrated in Fig. 34, the coil piece 70E includes a pair of slot accommodation portions 21 (slot accommodation portions 210C and 211C). As described above, the slot accommodation portions 210C and 211C are inserted into two slots 11 separated by five slots in the circumferential direction.

As illustrated in Fig. 34, the coil piece 70E includes a short-pitch crossover portion 224E on the Z1 side. As described above, the short-pitch crossover portion 224E is bent so as to be offset in the radial direction by six turns.

The short-pitch crossover portion 224E includes a head top portion 2240E (hereinafter also referred to as the "short-pitch head top portion 2240E") located on the axially outermost side. The short-pitch head top portion 2240E extends in the radial direction and the circumferential direction. In Embodiment 3, the short-pitch head top portion 2240E extends in the radial direction for six turns.

The short-pitch crossover portion 224E includes non-head top portions (hereinafter also referred to as "short-pitch non-head top portions 2241E and 2242E") on both sides of the short-pitch head top portion 2240E in the circumferential direction. The short-pitch non-head top portions 2241E and 2242E have root portions (hereinafter also referred to as "short-pitch root portions 2243E and 2244E") extending continuously from the slot accommodation portions in the axial direction. The short-pitch root portions 2243E and 2244E extend in the axial direction. In Embodiment 3, a portion of the short-pitch non-head top portion 2241E excluding the short-pitch root portion 2243E forms an oblique portion extending from the short-pitch root portion 2243E in the circumferential direction and to the axially outer side. A portion of the short-pitch non-head top portion 2242E excluding the short-pitch root portion 2244E forms an oblique portion extending from the short-pitch root portion 2244E in the circumferential direction and to the axially outer side. The portion of the short-pitch non-head top portion 2241E excluding the short-pitch root portion 2243E (an example of a second oblique portion) and the portion of the long-pitch non-head top portion 2231D excluding the long-pitch root portion 2233D (an example of a first oblique portion) are parallel to each other (see Fig. 31).

The short-pitch non-head top portion 2241E is offset radially inward by six turns relative to the short-pitch non-head top portion 2242E. Such an offset may be achieved by a section of the short-pitch head top portion 2240E.

As illustrated in Fig. 34, the coil piece 70E includes the two leg portions 71 (also referred to as the "leg portions 710C and 711C" for distinction) continuous from the pair of slot accommodation portions 210C and 211C on the Z2 side. The leg portions 710C and 711C are bent in the circumferential direction so as to extend in opposite circumferential directions. On the Z2 side, the coil piece 70E is joined to the coil piece 70A (the coil piece 70A including the standard pitch crossover portion 221) at one end in the circumferential direction, and is joined to the coil piece 70A (the coil piece 70A including the standard pitch crossover portion 222) at the other end in the circumferential direction.

Here, in Embodiment 3, the coil piece 70E is disposed with respect to the coil piece 70D such that a circumferential range of the short-pitch crossover portion 224E is in a circumferential range of the long-pitch crossover portion 223D. The slot 11 into which the slot accommodation portion 210C is inserted and the slot 11 into which the slot accommodation portion 210B is inserted are adjacent to each other in the circumferential direction, and the slot 11 into which the slot accommodation portion 211C is inserted and the slot 11 into which the slot accommodation portion 211B is inserted are adjacent to each other in the circumferential direction.

In Embodiment 3, an increase in the axial size of the coil end on the Z1 side can be prevented by adopting the following configuration.

That is, in Embodiment 3, the long-pitch head top portion 2230D and the short-pitch head top portion 2240E do not overlap when viewed in the axial direction, similarly to Embodiment 1 and the like described above. That is, as illustrated in Fig. 35, the long-pitch head top portion 2230D and the short-pitch head top portion 2240E have different circumferential positions. Accordingly, axial positions of the long-pitch head top portion 2230D and the short-pitch head top portion 2240E can be made the same, and as a result, the axial size of the coil end on the Z1 side can be reduced.

As illustrated in Fig. 36, the long-pitch head top portion 2230D and the short-pitch head top portion 2240E are located at the axially outer side of the head top portion 2210 of the standard pitch crossover portion 221. The coil piece 70D and the coil piece 70E extend in the circumferential direction so as to straddle the standard pitch crossover portion 221 in the radial direction from the axially outer side.

In Embodiment 3, the long-pitch head top portion 2230D is located closer to the slot accommodation portion 210B in the circumferential direction than the short-pitch head top portion 2240E. Accordingly, the circumferential positions of the long-pitch head top portion 2230D and the short-pitch head top portion 2240E are different from each other. However, in a modification, the disposition may be reversed. That is, the long-pitch head top portion 2230D may be located farther from the slot accommodation portion 210B in the circumferential direction than the short-pitch head top portion 2240E.

In Embodiment 3, the long-pitch root portion 2234D is offset radially outward in a middle thereof (within an axial range of the long-pitch root portion 2234D). Specifically, the long-pitch root portion 2234D includes a bending portion 2235D bent radially outward, and by including the bending portion 2235D, the long-pitch root portion 2234D is offset radially outward by approximately one turn. Since the long-pitch root portion 2234D is offset radially outward, an axial length thereof is set to be longer than that of the short-pitch root portion 2244E.

In Embodiment 3, since the bending portion 2235D is provided, as illustrated in Fig. 35, the long-pitch crossover portion 223D can intersect or overlap the short-pitch crossover portion 224E from the radially outer side when viewed in the radial direction from the radially outer side. In particular, the short-pitch non-head top portion 2242E does not overlap the long-pitch crossover portion 223D over an entire section thereof when viewed in the axial direction. Similarly, the long-pitch non-head top portion 2232D does not overlap the short-pitch crossover portion 224E over an entire section thereof when viewed in the axial direction. Accordingly, it is possible to reduce the axial size of the coil end on the Z1 side while improving ease of assembly of the coil piece 70E and the coil piece 70D.

Specifically, in Embodiment 3, unlike Embodiment 1 described above, as described above, when viewed in the axial direction, the long-pitch crossover portion 223D does not overlap the short-pitch non-head top portion 2242E, and the short-pitch crossover portion 224E does not overlap the long-pitch non-head top portion 2232D. Accordingly, unlike Embodiment 1 described above, the coil piece 70D and the coil piece 70E can be assembled in a mutually independent manner, and the ease of assembly is improved as compared with Embodiment 1 described above. That is, in a case of Embodiment 1 described above, since the coil piece 70B and the coil piece 70C overlap (intersect) when viewed in the axial direction, it is necessary to set and simultaneously assemble the coil piece 70B and the coil piece 70C. In contrast, according to Embodiment 3, for the coil piece 70D and the coil piece 70E, the coil piece 70D can be assembled after the coil piece 70E is assembled.

As illustrated in Fig. 35, the short-pitch root portion 2243E and the long-pitch root portion 2233D do not have an offset in the radial direction, unlike the bending portion 2235D. The long-pitch non-head top portion 2231D of the long-pitch crossover portion 223D extends in the circumferential direction from the long-pitch root portion 2233D to the long-pitch head top portion 2230D through an axially outer side of the short-pitch non-head top portion 2241E of the short-pitch crossover portion 224E when viewed in the radial direction.

In Embodiment 3, the long-pitch root portion 2234D is offset radially outward relative to the slot accommodation portion 211B at the first turn, but the long-pitch root portion 2234D may be offset radially inward relative to the slot accommodation portion 210B at the sixth turn. A configuration in which the root portion from the first turn, which is the radially outermost turn, is offset radially outward is more advantageous than a configuration in which the root portion from the sixth turn, which is the radially innermost turn, is offset radially inward because a positional relation with the rotor 150 is not restricted.

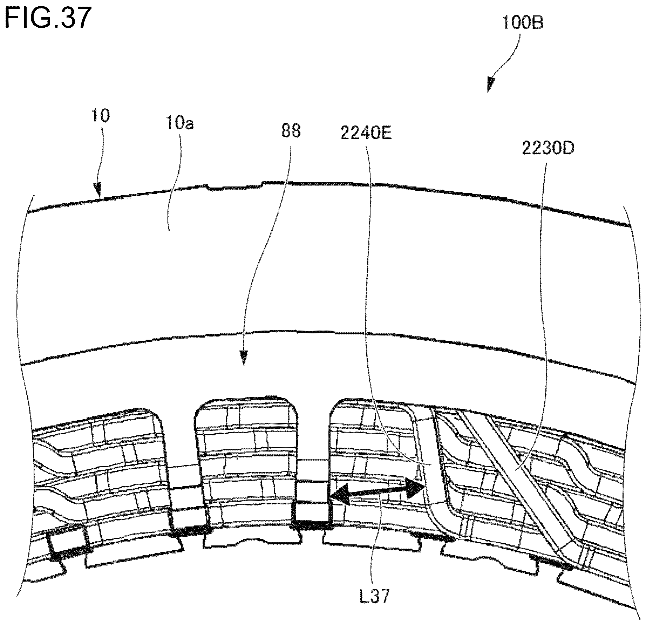

Next, a further characteristic configuration of Embodiment 3 will be described with reference to Fig. 37 and subsequent drawings.

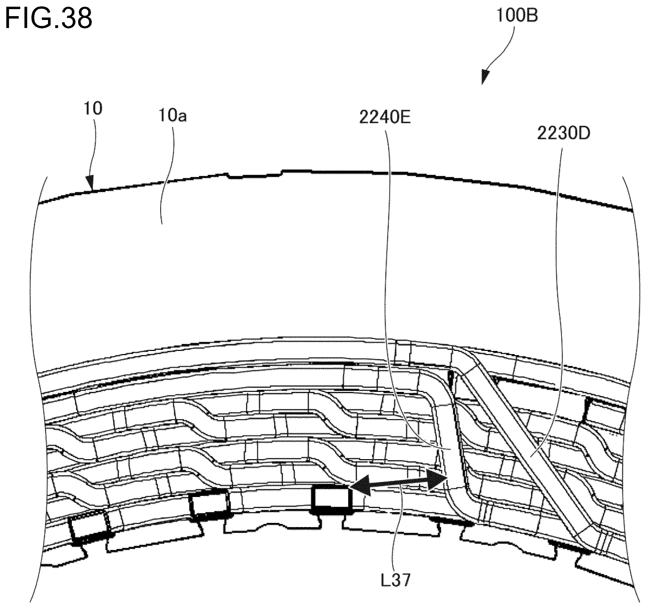

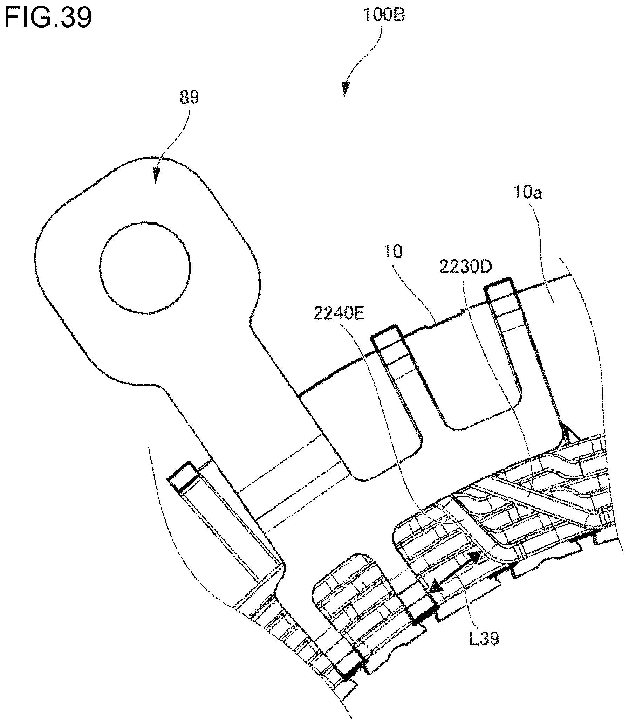

Fig. 37 is a plan view in which a part of the stator 100B is viewed from the Z1 side, illustrating a relationship between a neutral line bus bar 88 and the short-pitch head top portion 2240E. Fig. 38 is a plan view illustrating a state in which the neutral line bus bar 88 in Fig. 37 is removed. Fig. 39 is a plan view in which another part of the stator 100B is viewed from the Z1 side, illustrating a relationship between a power line bus bar 89 and the short-pitch head top portion 2240E. Fig. 39 illustrates a state in which the neutral line bus bar 88 is removed for the sake of description.

In Embodiment 3, as illustrated in Figs. 37 and 38, the short-pitch head top portion 2240E has a smaller extension range in the circumferential direction (circumferential length) than the long-pitch head top portion 2230D. That is, the short-pitch head top portion 2240E has a larger inclination (displacement amount in the radial direction per unit length in the circumferential direction) than the long-pitch head top portion 2230D when viewed in the axial direction.

Accordingly, as illustrated in Figs. 37 and 39, a distance (spatial distance) between the neutral line bus bar 88 and the power line bus bar 89, which are various bus bars, and the short-pitch head top portion 2240E can be shortened, and insulation between different phases can be enhanced.

Specifically, as illustrated in Figs. 37 and 38, a distance L37 between the neutral line bus bar 88 and the short-pitch head top portion 2240E can be shortened. Although not illustrated in Fig. 37, when an inclination of the short-pitch head top portion 2240E viewed in the axial direction is the same as an inclination of the long-pitch head top portion 2230D viewed in the axial direction, the distance L37 is short. A joint portion between the neutral line bus bar 88 and a leader line from the stator coil 20B is implemented by welding or the like, and is a portion where an insulating coating is removed.

Similarly, as illustrated in Fig. 39, a distance L39 between the power line bus bar 89 and the short-pitch head top portion 2240E can be shortened. Similarly, although not illustrated in Fig. 39, when the inclination of the short-pitch head top portion 2240E viewed in the axial direction is the same as the inclination of the long-pitch head top portion 2230D viewed in the axial direction, the distance L39 is short. A joint portion between the power line bus bar 89 and a leader line from the stator coil 20B is implemented by welding or the like, and is a portion where an insulating coating is removed.

Although the embodiments have been described in detail, this disclosure is not limited to the specific embodiments, and various modifications and changes are possible within the scope of the claims. It is also possible to combine all or a plurality of components of the embodiment described above.

In the above-described embodiment, the configuration is a so-called "4Y" configuration in which a parallel number is "4", and the parallel number may be any numerical value (for example, an even number) other than 4. The larger the parallel number, the greater an advantage in increasing a current flowing through the rotary electric machine 200. For example, in a case of a so-called "2Y" configuration in which the parallel number is "2", a winding form following the U1 coil portion 31 and the U2 coil portion 32 (or the U3 coil portion 33 and the U4 coil portion 34) may be used.

Regarding each of the above embodiments, the following appendixes are further disclosed.

### Appendix 1

A rotary electric machine stator including:
a stator coil to which three-phase AC power is supplied; and
a stator core having a plurality of slots and around which the stator coil is wound, in which
the plurality of slots include a first slot and a second slot adjacent to each other in a circumferential direction, and a third slot and a fourth slot adjacent to each other in the circumferential direction, the third slot and the fourth slot being different from the first slot and the second slot,
the first slot and the fourth slot are spaced apart from each other in the circumferential direction at a first slot pitch,
the second slot and the third slot are spaced apart from each other in the circumferential direction at a second slot pitch smaller than the first slot pitch,
the stator coil includes, in a same phase of three phases,
   a first slot accommodation portion disposed at an outermost radial position of the first slot,
   a first root portion extending in an axial direction from an end surface of the stator core while continuing from the first slot accommodation portion,
   a second slot accommodation portion disposed at an outermost radial position of the second slot,
   a second root portion extending in the axial direction from an end surface of the stator core while continuing from the second slot accommodation portion,
   a third slot accommodation portion disposed at an innermost radial position of the third slot,
   a third root portion extending in the axial direction from an end surface of the stator core while continuing from the third slot accommodation portion,
   a fourth slot accommodation portion disposed at an innermost radial position of the fourth slot,
   a fourth root portion extending in the axial direction from an end surface of the stator core while continuing from the fourth slot accommodation portion,
   a first circumferential portion extending in the circumferential direction, including a first head top portion located on an axially outermost side, and integrally connecting the first root portion and the fourth root portion via the first head top portion, and
   a second circumferential portion extending in the circumferential direction, including a second head top portion located on the axially outermost side, and integrally connecting the second root portion and the third root portion via the second head top portion,
one of the first root portion and the second root portion is offset radially outward relative to the other, or
one of the fourth root portion and the third root portion is offset radially inward relative to the other, and
the first head top portion and the second head top portion do not overlap in the axial direction.

Here, in the above-described embodiment, the first circumferential portion refers to the long-pitch head top portion 2230 and the portion of the long-pitch non-head top portions 2231, 2232 excluding the long-pitch root portion 2233, 2234. In the above-described embodiment, the second circumferential portion refers to the short-pitch head top portion 2240 and a portion of the short-pitch non-head top portions 2241, 2242 excluding the short-pitch root portion 2243, 2244.

### Appendix 2

The rotary electric machine stator according to Appendix 1, in which
the first head top portion and the second head top portion do not overlap when viewed in the axial direction.

### Appendix 3

The rotary electric machine stator according to Appendix 1, in which
the first head top portion and the second head top portion are at a same axial position.

### Appendix 4

The rotary electric machine stator according to Appendix 1, in which
a first non-head top portion includes a first oblique portion extending continuously from the slot accommodation portion at an innermost radial position of the first slot in the axial direction and the circumferential direction,
a second non-head top portion includes a second oblique portion extending continuously from the slot accommodation portion at an innermost radial position of the second slot in the axial direction and the circumferential direction, and
the first oblique portion and the second oblique portion extend in parallel to each other when viewed in a radial direction.

### Appendix 5

The rotary electric machine stator according to Appendix 1, in which
the first slot pitch is larger than the second slot pitch by one slot.

### Appendix 6

The rotary electric machine stator according to any one of Appendixes 1 to 5, in which
the second root portion is offset radially outward relative to the first root portion.

### Appendix 7

The rotary electric machine stator according to Appendix 6, in which
the second head top portion extends in the circumferential direction while extending in the radial direction, and
the first non-head top portion is located axially inward of the second head top portion.

### Appendix 8

The rotary electric machine stator according to Appendix 6, in which
the first circumferential portion further includes a first inner non-head top portion that is a portion between the first head top portion and the fourth root portion, and a first outer non-head top portion that is a portion between the first head top portion and the first root portion,
the second circumferential portion further includes a second inner non-head top portion that is a portion between the second head top portion and the third root portion, and a second outer non-head top portion that is a portion between the second head top portion and the second root portion,
the first outer non-head top portion is located axially inward of the second head top portion, and the first inner non-head top portion is located axially outward of the second inner non-head top portion.

### Appendix 9

The rotary electric machine stator according to any one of Appendixes 1 to 5, in which
the first root portion is offset radially outward relative to the second root portion.

### Appendix 10

The rotary electric machine stator according to Appendix 9, in which
of both sides in the circumferential direction of the second head top portion, the second non-head top portion on a side close to the slot accommodation portion at the outermost radial position of the second slot does not overlap a first crossover portion when viewed in the axial direction over an entire section.

### Appendix 11

The rotary electric machine stator according to Appendix 9, in which
the first head top portion extends in the circumferential direction while extending in the radial direction, and
the second head top portion extends in the circumferential direction while extending in the radial direction, and has a circumferential length shorter than a circumferential length of the first head top portion.

### Appendix 21

A rotary electric machine stator including:
a stator coil; and
a stator core having a plurality of slots and around which the stator coil is wound, in which the stator coil has two or more parallel numbers for each phase,
the stator coil includes
   slot accommodation portions each inserted into a corresponding one of the plurality of slots, and
   crossover portions each exposed from an axial end surface of the stator core and extending in a circumferential direction to connect a corresponding pair of the slot accommodation portions,
each of the crossover portions on one side in an axial direction is formed by joining two leg portions extending from the corresponding pair of the slot accommodation portions having a standard slot pitch,
the crossover portions on the other side in the axial direction include a standard crossover portion formed integrally with the pair of the slot accommodation portions having the standard slot pitch, a first crossover portion formed integrally with a corresponding pair of the slot accommodation portions having a first slot pitch, and a second crossover portion formed integrally with a corresponding pair of the slot accommodation portions having a second slot pitch,
the first slot pitch and the second slot pitch are different from the standard slot pitch, the first slot pitch is larger than the second slot pitch,
the pair of the slot accommodation portions having the first slot pitch are disposed at an innermost radial position and an outermost radial position,
the pair of the slot accommodation portions having the second slot pitch are disposed at an innermost radial position and an outermost radial position,
the first crossover portion includes a first head top portion located on an axially outermost side and a first non-head top portion on both sides of the first head top portion in the circumferential direction,
the second crossover portion includes a second head top portion located on the axially outermost side and a second non-head top portion on both sides of the second head top portion in the circumferential direction within a circumferential range of the first crossover portion,
the plurality of slots include a first slot and a second slot adjacent to each other in the circumferential direction,
the first non-head top portion includes a first root portion extending continuously from the slot accommodation portion at an outermost or innermost radial position of the first slot in the axial direction,
the second non-head top portion includes a second root portion extending continuously from the slot accommodation portion at the same radial position as the first root portion in the second slot in the axial direction, and
one of the first root portion and the second root portion is offset radially outward or inward relative to the other.

### Appendix 22

The rotary electric machine stator according to Appendix 21, in which
the first head top portion and the second head top portion do not overlap when viewed in the axial direction (have different circumferential positions).

### Appendix 23

The rotary electric machine stator according to Appendix 21, in which
the first head top portion and the second head top portion are at a same axial position.

### Appendix 24

The rotary electric machine stator according to any one of Appendixes 21 to 23, in which
the first non-head top portion includes a first oblique portion extending continuously from the slot accommodation portion at the innermost radial position of the first slot in the axial direction and the circumferential direction,
the second non-head top portion includes a second oblique portion extending continuously from the slot accommodation portion at an innermost radial position of the second slot in the axial direction and the circumferential direction, and
the first oblique portion and the second oblique portion extend in parallel to each other when viewed in a radial direction.

### Appendix 25

The rotary electric machine stator according to any one of Appendixes 21 to 24, in which
the first slot pitch is larger than the standard slot pitch by one slot, and
the second slot pitch is smaller than the standard slot pitch by one slot.

### Appendix 26

The rotary electric machine stator according to any one of Appendixes 21 to 25, in which
the second root portion is offset radially outward relative to the first root portion.

### Appendix 27

The rotary electric machine stator according to Appendix 26, in which
the second head top portion extends in the circumferential direction while extending in the radial direction, and
the first non-head top portion is located axially inward of the second head top portion.

### Appendix 28

The rotary electric machine stator according to Appendix 26 or 27, in which
of both sides of the first head top portion in the circumferential direction, the first non-head top portion on a side close to the slot accommodation portion at the outermost radial position of the first slot is located axially inward of the second head top portion, and the first non-head top portion on a side close to the slot accommodation portion at the innermost radial position of the first slot is located axially outward of the second non-head top portion on a side close to the slot accommodation portion at the innermost radial position of the second slot of both sides of the second head top portion in the circumferential direction.

### Appendix 29

The rotary electric machine stator according to any one of Appendixes 21 to 25, in which
the first root portion is offset radially outward relative to the second root portion.

### Appendix 30

The rotary electric machine stator according to Appendix 29, in which
of both sides in the circumferential direction of the second head top portion, the second non-head top portion on a side close to the slot accommodation portion at an outermost radial position of the second slot does not overlap the first crossover portion when viewed in the axial direction over an entire section.

### Appendix 31

The rotary electric machine stator according to Appendix 29 or 30, in which
the first head top portion extends in the circumferential direction while extending in the radial direction, and
the second head top portion extends in the circumferential direction while extending in the radial direction, and has a circumferential length shorter than a circumferential length of the first head top portion.

### Appendix 32

A rotary electric machine stator including:
a stator core having a plurality of slots; and
a stator coil wound around the stator core by a lap winding and having four parallel windings between a power supply side and a neutral line for each phase of three phases, in which
the stator coil includes a coil piece including
   slot accommodation portions respectively accommodated in the slots spaced in a circumferential direction,
   a crossover portion exposed from an end surface on one side in an axial direction of the stator core, integrally connecting the slot accommodation portions, and extending in the circumferential direction, and
   leg portions respectively extending from the slot accommodation portions to a side opposite to the crossover portion and protruding from an end surface on the other side in the axial direction of the stator core,
the coil piece includes a plurality of types of
   a standard coil piece in which the crossover portion has a standard slot pitch,
   a first coil piece in which the crossover portion has a first slot pitch larger than the standard slot pitch by one slot, and
   a second coil piece in which the crossover portion has a second slot pitch smaller than the standard slot pitch by one slot,
the plurality of slots include
   first slots disposed at the standard slot pitch in the circumferential direction and in which only the slot accommodation portions of a same phase among the three phases are disposed, and
   second slots disposed at the standard slot pitch in the circumferential direction and in which only the slot accommodation portions of the same phase among the three phases are disposed, and adjacent to the respective first slots on one side in the circumferential direction,
the parallel windings include
   a first unit coil in which the slot accommodation portions of the standard coil piece are disposed at positions other than both radially innermost and radially outermost positions of the first slots spaced in the circumferential direction, and the leg portions are joined to form a lap winding, and
   a second unit coil in which the slot accommodation portions of the standard coil piece are disposed at positions other than both radially innermost and radially outermost positions of the second slots spaced in the circumferential direction, and the leg portions are joined to form a lap winding,
one of the slot accommodation portions of the first coil piece is disposed at the radially outermost position of the first slot, and the other of the slot accommodation portions of the first coil piece is disposed at a radially innermost position of the second slot,
the one of the leg portions of the first coil piece and a corresponding one of the leg portions at one end of the first unit coil are joined, and the other of the leg portions of the first coil piece and a corresponding one of the leg portions at the other end of the second unit coil are joined,
one of the slot accommodation portions of the second coil piece is disposed at the radially outermost position of the second slot, and the other of the slot accommodation portions of the second coil piece is disposed at the radially innermost position of the first slot,
the one of the leg portions of the second coil piece and a corresponding one of the leg portions at one end of the second unit coil are joined, and the other of the leg portions of the second coil piece and a corresponding one of the leg portions at the other end of the first unit coil are joined, and
a power line terminal or a neutral line terminal is connected to the radially innermost position and the radially outermost position of the first slot and the second slot, and the power line terminal and the neutral line terminal are not connected to positions other than both the radially innermost position and the radially outermost position of the first slot and the second slot.

### Appendix 33

The rotary electric machine stator according to Appendix 32, in which
the stator coil includes a first coil portion, a second coil portion, a third coil portion, and a fourth coil portion as the four parallel windings, and
in each phase, the first coil portion and the third coil portion, and the second coil portion and the fourth coil portion have opposite current flow directions when viewed in a radial direction when a current flows from a power line to the neutral line.

### Appendix 34

The rotary electric machine stator according to Appendix 32 or 33, in which
the first slot and the second slot are paired and disposed along the circumferential direction at the standard slot pitch for each phase, and
in the first coil portion to the fourth coil portion, the first coil piece and the second coil piece are alternately disposed via the standard coil piece in the circumferential direction.

### Appendix 35

The rotary electric machine stator according to any one of Appendixes 32 to 34, in which
in the first coil portion to the fourth coil portion, the standard coil piece is inserted into only one slot of the first slot and the second slot of a first pair on a first side in the circumferential direction, and is inserted into only the other slot of the first slot and the second slot of the first pair on a second side in the circumferential direction.

### Appendix 36

The rotary electric machine stator according to Appendix 35, in which
in the first coil portion to the fourth coil portion, the standard coil piece is inserted into only the other slot of the first slot and the second slot of a second pair adjacent to the first pair in the circumferential direction on the first side in the circumferential direction, and is inserted into only the one slot of the first slot and the second slot of the second pair on the second side in the circumferential direction.

### Appendix 37

The rotary electric machine stator according to Appendix 36, in which
the first coil portion and the third coil portion have the standard coil pieces inserted into the first slots and the second slots of the same first pair and second pair,
the second coil portion and the fourth coil portion have the standard coil pieces inserted into the first slot and the second slot of the same first pair and second pair, and
the first pair and the second pair related to the first coil portion and the third coil portion and the first pair and the second pair related to the second coil portion and the fourth coil portion are shifted in the circumferential direction by the standard slot pitch.

### Appendix 40

A rotary electric machine stator including:
a stator core having a plurality of slots; and
a stator coil wound around the stator core by a short-pitch lap winding and having four parallel windings between a power supply side and a neutral line for each of three phases, in which
the stator coil includes a plurality of coil pieces each including
   slot accommodation portions respectively accommodated in the slots spaced in a circumferential direction,
   a crossover portion exposed from an end surface on one side in an axial direction of the stator core, integrally connecting the slot accommodation portions, and extending in the circumferential direction, and
   leg portions respectively extending from the slot accommodation portions to a side opposite to the crossover portion and protruding from an end surface on the other side in the axial direction of the stator core,
the plurality of coil pieces include a plurality of types of
   a standard coil piece in which the crossover portion has a standard slot pitch,
   a first coil piece in which the crossover portion has a first slot pitch larger than the standard slot pitch by three slots, and
   a second coil piece in which the crossover portion has a second slot pitch larger than the standard slot pitch by one slot,
the four parallel windings include a plurality of unit coil portions formed by joining the standard coil pieces in series,
one end of the unit coil portion and the other end of another unit coil portion are connected in series via the first coil piece or the second coil piece, and
the first coil piece and the second coil piece are alternately disposed in a winding direction of each of the four parallel windings.

### Appendix 41

The rotary electric machine stator according to Appendix 40, in which
the plurality of slots include a first end portion slot, a central slot, and a second end portion slot that are continuous in order in the circumferential direction,
two or more standard coil pieces of a same phase are inserted into the central slot side by side in a radial direction,
the slot accommodation portions of the standard coil pieces of two different phases are alternately inserted into the first end portion slot and the second end portion slot side by side in the radial direction, and
the first end portion slot, the central slot, and the second end portion slot form a group and are disposed along the circumferential direction at the standard slot pitch for each phase.

### Appendix 42

The rotary electric machine stator according to Appendix 41, in which
in the first coil portion to the fourth coil portion, the standard coil piece is inserted into only the central slot of a first group on a first side in the circumferential direction, and is inserted into only one slot of the first end portion slot and the central slot of the first group on a second side in the circumferential direction.

### Appendix 43

The rotary electric machine stator according to Appendix 42, in which
in the first coil portion to the fourth coil portion, the standard coil piece is inserted into only the other slot of the first end portion slot and the central slot of a second group adjacent to the first group in the circumferential direction on the first side in the circumferential direction, and is inserted into only the central slot of the second group on the second side in the circumferential direction.

### Appendix 52

A rotary electric machine stator including:
a stator coil; and
a stator core including a plurality of slots and in which the stator coil is wound by a lap winding, in which
the stator coil includes
   a first coil portion, a second coil portion, a third coil portion and a fourth coil portion connected in parallel to each other between a power supply side and a neutral line for each phase,
   slot accommodation portions each inserted into a corresponding one of the plurality of slots, and
   crossover portions each exposed from an axial end surface of the stator core and extending in a circumferential direction to connect a corresponding pair of the slot accommodation portions,
each of the crossover portions on one side in an axial direction is formed by joining two leg portions extending from the corresponding pair of the slot accommodation portions having a standard slot pitch,
the crossover portions on the other side in the axial direction include a standard crossover portion formed integrally with the pair of the slot accommodation portions having the standard slot pitch, a first crossover portion formed integrally with a corresponding pair of the slot accommodation portions having a first slot pitch, and a second crossover portion formed integrally with a corresponding pair of the slot accommodation portions having a second slot pitch,
the first slot pitch is larger than the standard slot pitch by one slot, and the second slot pitch is smaller than the standard slot pitch by one slot,
the first coil portion to the fourth coil portion are formed by a plurality of types of coil pieces including a standard coil piece having the standard crossover portion, a first coil piece having the first crossover portion, and a second coil piece having the second crossover portion,
the plurality of slots include a first slot and a second slot adjacent to each other in the circumferential direction,
two or more standard coil pieces of a same phase are inserted side by side in a radial direction into the first slot and the second slot,
the first slot and the second slot form a pair and are disposed along the circumferential direction at a predetermined pitch for each phase, and
among the plurality of standard coil pieces inserted into the same pair of the first slot and the second slot and having the crossover portion within a common circumferential range, the standard coil piece on a radially outermost side has one side in the circumferential direction joined to one of the first coil piece and the second coil piece, and the standard coil piece on a radially innermost side has the other side in the circumferential direction joined to the other of the first coil piece and the second coil piece.

### Appendix 53

The rotary electric machine stator according to Appendix 52, in which
in each phase, the first coil portion and the third coil portion, and the second coil portion and the fourth coil portion have opposite current flow directions when viewed in the radial direction when a current flows from a power line to the neutral line.

### Appendix 54

The rotary electric machine stator according to Appendix 52 or 53, in which
the predetermined pitch is same as the standard slot pitch, and
in the first coil portion to the fourth coil portion, the first coil piece and the second coil piece are alternately disposed via the standard coil piece in the circumferential direction.

### Appendix 55

The rotary electric machine stator according to any one of Appendixes 52 to 54, in which
in the first coil portion to the fourth coil portion, the standard coil piece is inserted into only one slot of the first slot and the second slot of a first pair on a first side in the circumferential direction, and is inserted into only the other slot of the first slot and the second slot of the first pair on a second side in the circumferential direction.

### Appendix 56

The rotary electric machine stator according to Appendix 55, in which
in the first coil portion to the fourth coil portion, the standard coil piece is inserted into only the other slot of the first slot and the second slot of a second pair adjacent to the first pair in the circumferential direction on the first side in the circumferential direction, and is inserted into only the one slot of the first slot and the second slot of the second pair on the second side in the

circumferential direction.

### Appendix 57

The rotary electric machine stator according to Appendix 56, in which
the first coil portion and the third coil portion have the standard coil pieces inserted into the first slots and the second slots of the same first pair and second pair,
the second coil portion and the fourth coil portion have the standard coil pieces inserted into the first slot and the second slot of the same first pair and second pair, and
the first pair and the second pair related to the first coil portion and the third coil portion and the first pair and the second pair related to the second coil portion and the fourth coil portion are shifted in the circumferential direction by the predetermined pitch.

### Appendix 60

A rotary electric machine stator including:
a stator coil; and
a stator core including a plurality of slots and in which the stator coil is wound by a short-pitch lap winding, in which
the stator coil includes
   a first coil portion, a second coil portion, a third coil portion and a fourth coil portion connected in parallel to each other between a power supply side and a neutral line for each phase,
   slot accommodation portions each inserted into a corresponding one of the plurality of slots, and
   crossover portions each exposed from an axial end surface of the stator core and extending in a circumferential direction to connect a corresponding pair of the slot accommodation portions,
each of the crossover portions on one side in an axial direction is formed by joining two leg portions extending from the corresponding pair of the slot accommodation portions having a standard slot pitch,
the crossover portions on the other side in the axial direction include a standard crossover portion formed integrally with the pair of the slot accommodation portions having the standard slot pitch, a first crossover portion formed integrally with a corresponding pair of the slot accommodation portions having a first slot pitch, and a second crossover portion formed integrally with a corresponding pair of the slot accommodation portions having a second slot pitch,
the first slot pitch is larger than the standard slot pitch by three slots, and the second slot pitch is larger than the standard slot pitch by one slot,
the first coil portion to the fourth coil portion are formed by a plurality of types of coil pieces including a standard coil piece having the standard crossover portion, a first coil piece having the first crossover portion, and a second coil piece having the second crossover portion,
the plurality of slots include a first end portion slot, a central slot, and a second end portion slot that are continuous in order in the circumferential direction,
two or more standard coil pieces of a same phase are inserted into the central slot side by side in a radial direction,
the slot accommodation portions of the standard coil pieces of two different phases are alternately inserted into the first end portion slot and the second end portion slot side by side in the radial direction,
the first end portion slot, the central slot, and the second end portion slot form a group and are disposed along the circumferential direction at a predetermined pitch for each phase, and
among the plurality of standard coil pieces inserted into the same pair of the slots, the standard coil piece on a radially outermost side has one side in the circumferential direction joined to one of the first coil piece and the second coil piece, and the standard coil piece on a radially innermost side has the other side in the circumferential direction joined to the other of the first coil piece and the second coil piece.

### Appendix 61

The rotary electric machine stator according to Appendix 60, in which
the predetermined pitch is same as the standard slot pitch, and
in the first coil portion to the fourth coil portion, the first coil piece and the second coil piece are alternately disposed via the standard coil piece in the circumferential direction.

### Appendix 62

The rotary electric machine stator according to Appendix 61, in which
in the first coil portion to the fourth coil portion, the standard coil piece is inserted into only the central slot of a first group on a first side in the circumferential direction, and is inserted into only one slot of the first end portion slot and the central slot of the first group on a second side in the circumferential direction.

### Appendix 63

The rotary electric machine stator according to Appendix 62, in which
in the first coil portion to the fourth coil portion, the standard coil piece is inserted into only the other slot of the first end portion slot and the central slot of a second group adjacent to the first group in the circumferential direction on the first side in the circumferential direction, and is inserted into only the central slot of the second group on the second side in the circumferential direction.

## Claims

1. A rotary electric machine stator (100, 100B) comprising:
a stator core (10) having a plurality of slots; and
a stator coil (20, 20B) wound around the stator core by a lap winding and having four parallel windings between a power supply side and a neutral line for each phase of three phases, wherein
the stator coil includes a coil piece including
slot accommodation portions respectively accommodated in the slots spaced in a circumferential direction,
a crossover portion exposed from an end surface on one side in an axial direction of the stator core, integrally connecting the slot accommodation portions, and extending in the circumferential direction, and
leg portions respectively extending from the slot accommodation portions to a side opposite to the crossover portion and protruding from an end surface on the other side in the axial direction of the stator core,
the coil piece includes a plurality of types of
a standard coil piece in which the crossover portion has a standard slot pitch,
a first coil piece in which the crossover portion has a first slot pitch larger than the standard slot pitch by one slot, and
a second coil piece in which the crossover portion has a second slot pitch smaller than the standard slot pitch by one slot,
the plurality of slots include
first slots disposed at the standard slot pitch in the circumferential direction and in which only the slot accommodation portions of a same phase among the three phases are disposed, and
second slots disposed at the standard slot pitch in the circumferential direction and in which only the slot accommodation portions of a same phase among the three phases are disposed, and adjacent to the respective first slots on one side in the circumferential direction,
the parallel windings include
a first unit coil in which the slot accommodation portions of the standard coil piece are disposed at positions other than both radially innermost and radially outermost positions of the first slots spaced in the circumferential direction, and the leg portions are joined to form a lap winding, and
a second unit coil in which the slot accommodation portions of the standard coil piece are disposed at positions other than both radially innermost and radially outermost positions of the second slots spaced in the circumferential direction, and the leg portions are joined to form a lap winding,
one of the slot accommodation portions of the first coil piece is disposed at the radially outermost position of the first slot, and the other of the slot accommodation portions of the first coil piece is disposed at the radially innermost position of the second slot,
the one of the leg portions of the first coil piece and a corresponding one of the leg portions at one end of the first unit coil are joined, and the other of the leg portions of the first coil piece and a corresponding one of the leg portions at the other end of the second unit coil are joined,
one of the slot accommodation portions of the second coil piece is disposed at the radially outermost position of the second slot, and the other of the slot accommodation portions of the second coil piece is disposed at the radially innermost position of the first slot,
the one of the leg portions of the second coil piece and a corresponding one of the leg portions at one end of the second unit coil are joined, and the other of the leg portions of the second coil piece and a corresponding one of the leg portions at the other end of the first unit coil are joined, and
a power line terminal or a neutral line terminal is connected to the radially innermost position and the radially outermost position of the first slot and the second slot, and the power line terminal and the neutral line terminal are not connected to positions other than both the radially innermost position and the radially outermost position of the first slot and the second slot.

2. The rotary electric machine stator according to claim 1, wherein
the stator coil includes a first coil portion, a second coil portion, a third coil portion, and a fourth coil portion as the four parallel windings, and
in each phase, the first coil portion and the third coil portion, and the second coil portion and the fourth coil portion have opposite current flow directions when viewed in a radial direction when a current flows from a power line to a neutral line.

3. The rotary electric machine stator according to claim 2, wherein
the first slot and the second slot are paired and disposed along the circumferential direction at the standard slot pitch for each phase, and
in the first coil portion to the fourth coil portion, the first coil piece and the second coil piece are alternately disposed via the standard coil piece in the circumferential direction.

4. The rotary electric machine stator according to claim 2 or 3, wherein
in the first coil portion to the fourth coil portion, the standard coil piece is inserted into only one slot of the first slot and the second slot of a first pair on a first side in the circumferential direction, and is inserted into only the other slot of the first slot and the second slot of the first pair on a second side in the circumferential direction.

5. The rotary electric machine stator according to claim 4, wherein
in the first coil portion to the fourth coil portion, the standard coil piece is inserted into only the other slot of the first slot and the second slot of a second pair adjacent to the first pair in the circumferential direction on the first side in the circumferential direction, and is inserted into only the one slot of the first slot and the second slot of the second pair on the second side in the circumferential direction.

6. The rotary electric machine stator according to claim 5, wherein
the first coil portion and the third coil portion have the standard coil pieces inserted into the first slots and the second slots of the same first pair and second pair,
the second coil portion and the fourth coil portion have the standard coil pieces inserted into the first slot and the second slot of the same first pair and second pair, and
the first pair and the second pair related to the first coil portion and the third coil portion and the first pair and the second pair related to the second coil portion and the fourth coil portion are shifted in the circumferential direction by the standard slot pitch.
